# EUROPÄISCHE PATENTSCHRIFT

(11) **EP 0 784 635 B1**
(45) Veröffentlichungstag und Bekanntmachung des Hinweises auf die Patenterteilung: **20.05.1998**
(21) Anmeldenummer: 95934636.2
(22) Anmeldetag: 23.09.1995
(51) Int. Cl.: C08F 6/00

(54) **VERFAHREN ZUR HERSTELLUNG EINER WÄSSRIGEN POLYMERISATDISPERSION**
PROCESS FOR PREPARING AN AQUEOUS POLYMER DISPERSION
PROCEDE DE PREPARATION DE DISPERSIONS AQUEUSES DE POLYMERE

(30) Priorität: 04.10.1994 DE 4435422
(43) Veröffentlichungstag der Anmeldung: 23.07.1997
(73) Patentinhaber: BASF AKTIENGESELLSCHAFT, 67056 Ludwigshafen (DE)
(72) Erfinder: BAUMSTARK, Roland, D-67434 Neustadt (DE); RUPANER, Robert, D-67059 Ludwigshafen (DE)
(86) Internationale Anmeldenummer: EP9503770
(87) Internationale Veröffentlichungsnummer: WO9610588

(56) Entgegenhaltungen:
- EP-A- 0 505 163
- US-A- 4 147 845

## Beschreibung

Die vorliegende Erfindung betrifft ein Verfahren zur Herstellung einer wäßrigen Polymerisatdispersion, bei dem man eine wäßrige Dispersion eines Polymerisats, das wenigstens ein wenigstens eine ethylenisch ungesättigte Gruppe aufweisendes Monomeres in chemisch gebundener Form eingebaut enthält, in an sich bekannter Weise so erzeugt, daß der Gesamtgehalt der wäßrigen Polymerisatdispersion an freien, d.h. nicht chemisch gebundenen, wenigstens eine ethylenisch ungesättigte Doppelbindung aufweisenden Monomeren (in dieser Schrift "Gehalt an Restmonomeren" oder "Restmonomerengehalt" genannt), bezogen auf den Polymerisatgehalt der wäßrigen Polymerisatdispersion, im Bereich von > 0 bis ≤ 1 Gew.-% liegt und anschließend diesen Restmonomerengehalt durch Einwirkung eines wenigstens ein Oxidationsmittel und wenigstens ein Reduktionsmittel umfassenden radikalischen Redoxinitiatorsystems verringert.

Wäßrige Polymerisatdispersionen sind fluide Systeme, die als disperse Phase in wäßrigem Dispergiermedium Polymerisatteilchen in stabiler disperser Verteilung befindlich enthalten. Der Durchmesser der Polymerisatteilchen liegt im allgemeinen hauptsächlich im Bereich von 0,01 bis 5 µm, häufig hauptsächlich im Bereich von 0,01 bis 1 µm. Die Stabilität der dispersen Verteilung erstreckt sich oft über einen Zeitraum von ≥ 1 Monat, vielfach sogar über einen Zeitraum von ≥ 3 Monaten. Ihr Polymerisatvolumenanteil beträgt, bezogen auf das Gesamtvolumen der wäßrigen Polymerisatdispersion, normalerweise 10 bis 70 Vol.-%.

Ebenso wie Polymerisatlösungen beim Verdampfen des Lösungsmittels, weisen wäßrige Polymerisatdispersionen beim Verdampfen des wäßrigen Dispergiermediums die Eigenschaft auf, Polymerisatfilme zu bilden, weshalb wäßrige Polymerisatdispersionen in vielfacher Weise als Bindemittel, z.B. für Anstrichfarben oder Massen zum Beschichten von Leder, Anwendung finden.

Prinzipiell unterscheidet der Fachmann wäßrige Polymerisatdispersionen in wäßrige Sekundär- und in wäßrige Primärdispersionen. Die wäßrigen Sekundärdispersionen sind solche, bei deren Herstellung das Polymerisat außerhalb des wäßrigen Dispergiermediums erzeugt wird, z.B. in Lösung eines geeigneten nichtwäßrigen Lösungsmittels befindlich. Diese Lösung wird anschließend in das wäßrige Dispergiermedium überführt und unter Dispergierung das Lösungsmittel, in der Regel destillativ, abgetrennt. Demgegenüber handelt es sich bei wäßrigen Primärdispersionen um solche, bei denen das Polymerisat unmittelbar in disperser Verteilung befindlich im wäßrigen Dispergiermedium selbst erzeugt wird. Allen Herstellverfahren ist im wesentlichen gemein, daß zum Aufbau des Polymerisats Monomere, die wenigstens eine ethylenisch ungesättigte Gruppierung aufweisen, mitverwendet werden oder daß dieser Aufbau ausschließlich aus solchen Monomeren erfolgt.

Der Einbau solcher wenigstens eine ethylenisch ungesättigte Gruppierung aufweisender Monomeren erfolgt üblicherweise durch initiierte Polyreaktion, wobei die Art und Weise der angewandten Initiierung insbesondere von den gewünschten anwendungstechnischen Eigenschaften des Zielproduktes bestimmt und diesen daher angepaßt wird. In Betracht kommt beispielsweise eine ionische oder eine radikalische Initiierung. Der Einbau kann aber auch durch katalytisch initiierte polymeranaloge Umsetzung erfolgen. Besonders häufig wird die radikalische Initiierung angewandt, weshalb der Einbau des wenigstens einen wenigstens eine ethylenisch ungesättigte Gruppierung aufweisenden Monomeren im Fall von wäßrigen Primärdispersionen in der Regel nach der Methode der radikalischen wäßrigen Emulsionspolymerisation und im Fall von wäßrigen Sekundärdispersionen in der Regel nach der Methode der radikalischen Lösungspolymerisation erfolgt.

Da es, unter Berücksichtigung der dazu erforderlichen Zeiträume, in der Regel nicht sinnvoll ist, unter Aufrechterhaltung der eigentlichen, die gewünschten Eigenschaften (z.B. Molekulargewicht, Molekulargewichtsverteilung, Verzweigungsgrad etc.) des Zielproduktes bestimmenden Polyreaktionsbedingungen, den Einbau des wenigstens einen wenigstens eine ethylenisch ungesättigte Gruppe aufweisenden Monomeren betreffend, einen vollständigen Umsatz anzustreben, weisen die nach Beendigung dieser Hauptpolyreaktion resultierenden wäßrigen Polymerisatdispersionen im Normalfall einen Gehalt an nicht ins dispergierte Polymerisat chemisch gebunden eingebauten, freien, wenigstens eine ethylenisch ungesättigte Doppelbindung aufweisenden Monomeren auf. Aufgrund der erhöhten Reaktionsfähigkeit der ethylenisch ungesättigten Doppelbindung sind solche Restmonomere, wie z.B. Acrylnitril und Vinylacetat, toxikologisch nicht völlig unbedenklich und daher sowohl von Herstellerseite als auch seitens des Verbrauchers unerwünscht.

Um den Restmonomerengehalt wäßriger Polymerisatdispersionen zu senken, stehen bereits unterschiedlichste Methoden zur Verfügung.

Aus der EP-A 584 458 ist bekannt, den Restmonomerengehalt wäßriger Polymerisatdispersionen durch Abstreifen mittels Wasserdampf zu verringern. Die EP-B 327 006 empfiehlt die Anwendung konventioneller Destillation.

Diese Verfahren sind insofern von Nachteil, als sie zwar den Restmonomerengehalt der wäßrigen Polymerisatdispersion zu reduzieren vermögen, jedoch die Frage der Entsorgung der Restmonomeren offen lassen. Letzteres Problem wird lediglich auf eine andere Ebene verlagert. Außerdem gehen mit ihrer Anwendung in der Regel Änderungen des Feststoffgehaltes der wäßrigen Polymerisatdispersion sowie Beeinträchtigungen der Stabilität der dispersen Verteilung einher.

Die EP-A 505 959 betrifft ein Verfahren zur Reduktion des Gehaltes an Vinylacetat in wäßrigen Polyvinylacetatdispersionen. Gemäß dem Verfahren der EP-A 505 959 wird das noch verbliebene monomere Vinylacetat in schwach alkalischem Medium zu Essigsäure und Acetaldehyd verseift, wobei letzteres durch zugesetztes Wasserstoffperoxid zu Essigsäure oxidiert wird. Nachteilig an dieser Verfahrensweise ist jedoch, daß sie aufgrund zusätzlicher Elektrolytbelastung die Stabilität der wäßrigen Polymerisatdispersion beeinträchtigt.

Die DE-A 42 10 208 betrifft ein Verfahren zur Absenkung des Gehaltes an freiem Vinylacetat und Vinylpropionat in wäßrigen Polymerisatdispersionen. Das Verfahren entspricht im wesentlichen einer kombinierten Anwendung von Abstreifen und Verseifen dieser Monomeren, weshalb die Nachteile der vorgenannten Verfahrensweisen auch auf das Verfahren der DE-A 42 10 208 zutreffen.

Die DE-A 30 06 172 betrifft ein Verfahren zur Reduktion des Gehaltes an freiem Acrylnitril in wäßrigen Polymerisatdispersionen. Im Rahmen dieser Verfahrensweise fügt man der wäßrigen Polymerisatdispersion zusätzliche Monomere hinzu, welche durch eine ausgeprägte Neigung der radikalischen Copolymerisation mit Acrylnitril gekennzeichnet sind, und setzt die radikalische Hauptpolyreaktion fort.

Aus der DE-A 38 34 734, der EP-A 379 892 und der EP-A 327 006 ist bekannt, den Gehalt an Restmonomeren von wäßrigen Polymerisatdispersionen mittels nach Beendigung der Hauptpolyreaktion sich anschließender radikalischer Nachpolymerisation durch Einwirkung von besonderen, für die Hauptpolymerisation aus verschiedenen Gründen häufig weniger geeigneten, radikalischen Redoxinitiatorsystemen zu reduzieren. Solche Redoxinitiatorsysteme umfassen wenigstens ein Oxidationsmittel, wenigstens ein Reduktionsmittel sowie gegebenenfalls ein oder mehrere in verschiedenen Wertigkeitsstufen auftretende Übergangsmetallionen. Eine zentrale Rolle hinsichtlich der Nachpolymerisationswirksamkeit des radikalischen Redoxinitiatorsystems in wäßrigen Polymerisatdispersionen fällt dabei dem Reduktionsmittel zu. Es sollte insbesondere so beschaffen sein, daß bei seiner Anwendung im Rahmen eines Redoxinitiatorsystems zum Zweck der radikalischen Nachpolymerisation in wäßrigen Polymerisatdispersionen
- die Stabilität der dispersen Verteilung in der wäßrigen Polymerisatdispersion im wesentlichen nicht beeinträchtigt wird,
- das Redoxinitiatorsystem seine vorteilhafte Wirkung insbesondere bei pH-Werten des wäßrigen Dispergiermediums von ≥ 6 bis 10, bevorzugt 7 bis 9, entfaltet, da die überwiegende Mehrzahl aller wäßrigen Polymerisatdispersionen anionisch stabilisiert wird,
- es nicht notwendigerweise der Mitwirkung eines Übergangsmetallions bedarf, da letzteres nach beendeter Nachpolymerisation in der wäßrigen Polymerisatdispersion verbleibt,
- möglichst keine unerwünschten flüchtigen Folgeprodukte erzeugt werden,
- im wesentlichen keine Verfärbung der Verfilmungen der wäßrigen Polymerisatdispersion resultiert.

Die US-A 4 529 753 empfiehlt in Spalten 3,4 reduzierende Zucker und deren Säureabkömmlinge, z.B. Ascorbinsäure sowie Alkalimetalldisulfit als in radikalischen Redoxinitiatorsystemen zum Zweck der radikalischen Nachpolymerisation in wäßrigen Polymerisatdispersionen geeignete Reduktionsmittel, wobei Natriumdisulfit als besonders geeignetes Reduktionsmittel hervorgehoben wird. Die EP-B 327 006 schließt sich auf Seite 7 dieser Empfehlung der US-A 4 529 753 an und nennt als weitere in entsprechender Weise geeignete Reduktionsmittel Sulfoxylate wie das Natriumsalz der Hydroxymethansulfinsäure (Rongalit® C). Ein Rongalit C umfassendes Redoxinitiatorsystem wird auch in Bsp. 1 der EP-A 379 892 sowie in der DE-A 38 34 734 zum Zweck der radikalischen Nachpolymerisation in einer wäßrigen Polymerisatdispersion angewendet.

Nachteilig an diesen im Stand der Technik empfohlenen Reduktionsmitteln ist jedoch, daß sie dem vorstehend beschriebenen Anforderungsprofil nicht in vollem Umfang genügen.

Auch ist bezüglich der im Stand der Technik empfohlenen Reduktionsmittel von Nachteil, daß sie in Kombination mit Oxidationsmitteln zur Anwendung gebracht werden müssen, die ein erhöhtes Oxidationspotential aufweisen. Verbleiben geringe Anteile solcher Oxidationsmittel in der wäßrigen Polymerisatdispersion, so beeinträchtigt dies z.B. deren Ausrüstung mit Konservierungsmitteln, da Biocide in der Regel außerordentlich empfindlich gegenüber Oxidationsmitteln mit erhöhtem Oxidationspotential sind (vgl. z.B. L. Conquer in Polymer Paint Col. J. Vol. 183, No. 4335 (1993) S. 421 bis 423).

Auch gemäß F. Hölscher, Dispersionen synthetischer Hochpolymerer, Teil I, Springer-Verlag, New York (1969), S. 117, führen Oxidationsmittelreste z.B. im Fall peroxidischer Oxidationsmittel zu anwendungstechnisch ungünstiger Beeinflussung des Dispersionssystems.

Die US-A 4 529 753 empfiehlt die Verfahrensweise der Nachpolymerisation und die Verfahrensweise des Abstreifens mit Wasserdampf simultan anzuwenden, womit auch diese Empfehlung mit den bereits beschriebenen Nachteilen befrachtet ist.

Außerdem ist in Anwendung der im Stand der Technik empfohlenen Verfahren zur Absenkung des Restmonomerengehaltes wäßriger Polymerisatdispersionen das Erreichen von Restmonomerengehalten von 1 Gew.-% und darunter, bezogen auf den Polymerisatgehalt der wäßrigen Polymerisatdispersion, üblicherweise zwar regelmäßig möglich, unterhalb der 1-Gew.-%-Grenze treten jedoch zunehmende Schwierigkeiten der Restmonomerenabsenkung auf. Diese sind vermutlich darauf zurückzuführen, daß den Restmonomeren in einer wäßrigen Polymerisatdispersion sowohl die dispergierten Polymerisatteilchen als auch das wäßrige Dispergiermedium als möglicher Aufenthaltsort zur Verfügung steht. Zwischen diesen beiden Phasen stellt sich ein Verteilungsgleichgewicht ein. Der Nachteil der bekannten Methoden zur Absenkung des Restmonomerengehaltes wäßriger Polymerisatdispersionen scheint nun darin begründet, daß sie im wesentlichen entweder nur das wäßrige Dispergiermedium oder nur die Polymerisatteilchen erfassen. D.h. eine signifikante Gesamtabsenkung des Restmonomerengehaltes der wäßrigen Polymerisatdispersion wird im wesentlichen diffusionskontrolliert erfolgen (wiederholte Einstellung des Verteilungsgleichgewichtes), worauf vermutlich die nicht befriedigende Geschwindigkeit der Restmonomerenabsenkung in wäßrigen Polymerisatdispersionen bei Anwendung der bekannten Verfahren zurückgeführt werden kann.

Die Möglichkeit der Verteilung auf zwei verschiedene Phasen ist vermutlich auch eine Ursache dafür, daß die Restmonomerenabsenkung in wäßrigen Polymerisatdispersionen gemäß den Verfahren des Standes der Technik bei einem Restmonomerengemisch, das wenigstens zwei voneinander verschiedene Monomere A und B, deren Verschiedenheit in aller Regel auch eine unterschiedliche Löslichkeit derselben sowohl im wäßrigen Dispergiermedium als auch in den dispergierten Polymerisatteilchen bedingt, umfaßt, für die voneinander verschiedenen Restmonomeren nicht gleichförmig erfolgt.

Die Aufgabe der vorliegenden Erfindung war daher, ein Verfahren zur Verringerung des Restmonomerengehaltes einer wäßrigen Polymerisatdispersion durch Einwirkung eines wenigstens ein Oxidationsmittel und wenigstens ein Reduktionsmittel umfassenden radikalischen Redoxinitiatorsystems zur Verfügung zu stellen, das die Nachteile der bekannten Verfahren zur Restmonomerenreduzierung in wäßrigen Polymerisatdispersionen nicht aufweist.

Als Lösung der Aufgabe wird ein Verfahren zur Herstellung einer wäßrigen Polymerisatdispersion zur Verfügung gestellt, bei dem man eine wäßrige Dispersion eines Polymerisats, das wenigstens ein wenigstens eine ethylenisch ungesättigte Gruppe aufweisendes Monomeres in chemisch gebundener Form eingebaut enthält, in an sich bekannter Weise so erzeugt, daß der Gesamtgehalt der wäßrigen Polymerisatdispersion an freien, d.h. nicht chemisch gebundenen, wenigstens eine ethylenisch ungesättigte Doppelbindung aufweisenden Monomeren, bezogen auf den Polymerisatgehalt der wäßrigen Polymerisatdispersion, im Bereich von > 0 bis ≤ 1 Gew.-% liegt und anschließend diesen Restmonomerengehalt durch Einwirkung eines wenigstens ein Oxidationsmittel und wenigstens ein Reduktionsmittel umfassenden radikalischen Redoxinitiatorsystems verringert, das dadurch gekennzeichnet ist, daß das Redoxinitiatorsystem als Reduktionsmittel eine in wäßriger Lösung in wenigstens zwei miteinander im Gleichgewicht stehenden tautomeren Formen vorliegende Verbindung, die Aminoiminomethansulfinsäure und/oder deren Salze, umfaßt. Selbstverständlich ist das erfindungsgemäße Verfahren auch im Bereich von Restmonomerengehalten von 10⁻³ bis 0,5 Gew.-% bzw. 10⁻³ bis 0,1 Gew.-%, bezogen auf den Polymerisatgehalt der wäßrigen Polymerisatdispersion, anwendbar.

Zur Lösung der der Erfindung zugrunde liegenden Aufgabe konnte von nachfolgendem Stand der Technik ausgegangen werden.

Aus Römpp, Chemie Lexikon, Cm-G, 9. Auflage, Georg Thieme Verlag, Stuttgart (1990), S. 1426, ist bekannt, daß Aminoiminomethansulfinsäure in wäßriger Lösung in zwei miteinander im Gleichgewicht stehenden Formen vorliegt (Tautomerie):

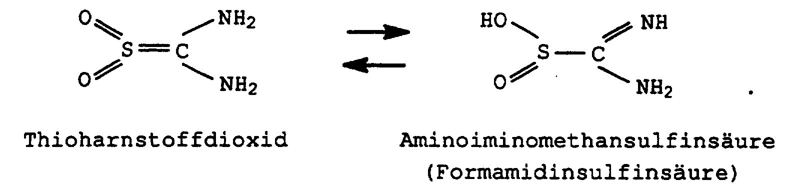

Die Firma Degussa AG vermarktet die Substanz als Reduktionsmittel F für die Textilindustrie.

Aus der DRP.-Anm. F 2886 (1944) Farbf. Bayer ist bekannt, daß Aminoiminomethansulfinsäure im Beisein von Sauerstoff radikalische wäßrige Hauptemulsionspolymerisationen zu initiieren vermag. In den Beispielen wird von 60, 80 und 100 % Ausbeute (Ausführungsbsp. 6) berichtet. Diesseitige Nacharbeitung von Ausführungsbeispiel 6 ergab einen Polymerisationsumsatz von 5 %, bezogen auf zu polymerisierendes Monomeres.

Die US-A 3 344 128 empfiehlt als Reduktionsmittel in die radikalische wäßrige Hauptemulsionspolymerisation von konjugierten Dienen und Mischungen von konjugierten Dienen und Vinylaromaten initiierenden Redoxinitiatorsystemen die Verwendung von Aminoiminomethansulfinsäure. Die berichteten Polymerisationsumsätze liegen alle unterhalb von 70 %.

Die JP 60/118706 betrifft die radikalische wäßrige Hauptemulsionspolymerisation zur Herstellung von Chloroprenpolymerisaten im Beisein von Aminoiminomethansulfinsäure. Der erzielte Polymerisationsumsatz beträgt 70 %. Die verbliebenen Restmonomeren werden durch Strippen mit Wasserdampf entfernt.

Die DE-A 36 05 331 betrifft ebenfalls die radikalische wäßrige Hauptemulsionspolymerisation von Chloropren. Als initiierende Redoxinitiatorsysteme werden auch solche empfohlen, die Aminoiminomethansulfinsäure umfassen. Als mögliche Monomerenumsätze werden in der Beschreibung 50 bis 99 % genannt. In den beispielhaften Ausführungsformen beträgt der Monomerenumsatz in allen Fällen < 70 %. Ganz allgemein wird in dieser Schrift empfohlen, während der radikalischen wäßrigen Hauptemulsionspolymerisation nicht umgesetzte organische Verbindungen durch Wasserdampfdestillation zu entfernen. In entsprechender Weise wird in den Ausführungsbeispielen verfahren.

Die EP-B 155 805 betrifft gleichfalls die radikalische wäßrige Hauptemulsionspolymerisation zur Herstellung von Chloroprenpolymerisaten. Die Ausführungsbeispiele werden unter Stickstoffatmosphäre durchgeführt und umfassen die Mitverwendung von Aminoiminomethansulfinsäure. Hinsichtlich der Mitverwendung eines Oxidationsmittels schweigt sich die EP-B 155 805 aus. Des weiteren sind die auf Chloropren bezogenen Polymerisationsumsätze in allen Ausführungsbeispielen auf Werte ≤ 95 % beschränkt. Zur Beseitigung der nicht umgesetzten Monomeren empfiehlt die EP-B 155 805 das Abstreifen mittels Wasserdampf.

Der Offenbarungsgehalt der DE-A 36 05 334 umfaßt ebenfalls die radikalische wäßrige Hauptemulsionspolymerisation von Chloropren in Anwendung von Aminoiminomethansulfinsäure enthaltenden radikalischen Redoxinitiatoren. Als üblicherweise zu erzielende Monomerenumsätze werden 63 bis 85 % angegeben. Zur Beseitigung nicht umgesetzter organischer Verbindungen wird die Anwendung der Wasserdampfdestillation empfohlen.

Die DE-A 36 05 332 betrifft auch die radikalische wäßrige Hauptemulsionspolymerisation von Chloropren. Die empfohlenen radikalischen Redoxinitiatorsysteme umfassen auch solche, die Aminoiminomethansulfinsäure enthalten. Als mögliche Monomerenumsätze werden in der Beschreibung 50 bis 99 % genannt. Die beispielhaften Ausführungsformen beschränken sich in allen Fällen auf Monomerenumsätze < 70 %. Auch hier wird empfohlen, Restmonomere durch Wasserdampfdestillation zu entfernen.

Die EP-B 505 163 betrifft ein Verfahren zur Verringerung des Restmonomerengehaltes von hauptsächlich aus Poly(meth)acrylsäure bestehenden Wasser absorbierenden Polymerisaten (Superabsorbern), bei dem man das Polymerisat entweder in Form seines festen wäßrigen Gels, in Form einer Dispersion dieses wäßrigen Gels in Öl oder in seiner wasserfreien Form u.a. mit einem Aminoiminomethansulfinsäure umfassenden Redoxinitiatorsystem behandelt.

Aus der DE-A 40 15 085 ist ein Verfahren zur Herstellung von Superabsorbern durch radikalische Polymerisation von überwiegend Säurefunktionen aufweisenden vinylischen Monomeren in wäßriger Lösung unter Initiierung mittels eines Aminoiminomethansulfinsäure umfassenden Redoxinitiatorsystems bekannt. Als Endprodukt wurden hohe Festigkeiten aufweisende Polymerisatgele erhalten, die einen verringerten Restmonomerengehalt aufweisen.

Aus allen diesen Verfahren des Standes der Technik läßt sich kein Hinweis auf die Eignung von Aminoiminomethansulfinsäure in radikalischen Redoxinitiatorsystemen bei Anwendung derselben zur Restmonomerenabsenkung in ≤ 1 Gew.-% Restmonomere (bezogen auf enthaltenes Polymerisat) aufweisenden wäßrigen Polymerisatdispersionen ableiten, da in keinem der bekannten Verfahren die spezifische zwei-Phasen-Verteilung der Restmonomeren wäßriger Polymerisatdispersionen (Polymerisatpartikel/wäßriges Dispergiermedium) von Belang ist. Dies gilt auch im Fall der DE-A 39 09 790

So ist es gemäß High Polymers Vol. IX, Emulsion Polymerization, Interscience Publishers, INC., New York, 3. Auflage (1965) S. 14/16 für das Verfahren der radikalischen wäßrigen Hauptemulsionspolymerisation wesentlich, daß die Radikalbildung nicht in den emulgierten Monomerentröpfchen, sondern in der wäßrigen Phase erfolgt, wohingegen die radikalische wäßrige Suspensionspolymerisation dadurch charakterisiert ist, daß die Radikalbildung in den Monomerentröpfchen stattfindet. Dieser Unterschied bedingt beispielsweise die bei Anwendung der beiden Verfahrensweisen signifikant voneinander verschiedenen resultierenden Polymerisatmolekulargewichte. Demgemäß werden sich für die beiden Verfahren radikalische Initiatorsysteme eigenen, die je nach Verfahren entweder ausgeprägt hydrophilen oder ausgeprägt lipophilen Charakter aufweisen.

Die EP-A 590 468 bestätigt diese Zusammenhänge.

Im Unterschied dazu könnten für eine effiziente radikalische Nachpolymerisation zur Restmonomerenverringerung in wäßrigen Polymerisatdispersionen eher solche Initiatorsysteme geeignet sein, die sowohl in der wäßrigen Phase als auch in den lipophilen Polymerpartikeln jeweils unmittelbar vor Ort Radikale zu bilden vermögen.

So werden diesseits die in Anwendung des erfindungsgemäßen Verfahrens, dessen kennzeichnender Teil dort einsetzt, wo die Verfahren der radikalischen wäßrigen Hauptemulsionspolymerisation enden, gefundenen günstigen Ergebnisse, ohne Anspruch auf Gültigkeit, u.a darauf zurückgeführt, daß Aminoiminomethansulfinsäure in wäßriger Lösung in zwei miteinander im Gleichgewicht stehenden Formen vorliegt, von denen bei relativer Betrachtung die eine, die Aminoiminomethansulfinsäure, eine hydrophilere und die andere, das Thioharnstoffdioxid, eine hydrophobere Form darstellt. Dabei wird es als günstig erachtet, daß sich das tautomere Gleichgewicht in natürlicher Weise der speziellen hydrophil/ lipophil-Balance der jeweiligen Polymerisatdispersion durch Gleichgewichtsverschiebung anzupassen vermag.

An dieser Stelle sei nochmals festgehalten, daß die Natur des im wäßrigen Medium dispergierten Polymerisats für den Erfolg des erfindungsgemäßen Verfahrens im wesentlichen keine Rolle spielt. D.h. der Begriff Polymerisat umfaßt hier sowohl Polykondensate, wie z.B. Polyester, aber auch Polyaddukte wie Polyurethane sowie Polymerisate, die durch ionische oder radikalische Polymerisation von ausschließlich wenigstens eine ethylenisch ungesättigte Doppelbindung aufweisenden Monomeren erhältlich sind sowie Mischvarianten der genannten Typen. Wesentlich ist nur, daß am Aufbau des im wäßrigen Medium dispergierten Polymerisats wenigstens ein wenigstens eine ethylenisch ungesättigte Gruppe aufweisendes Monomeres beteiligt ist, so daß überhaupt ein Problem der Restmonomerenentfernung bestehen kann. Die Art des Einbaus des wenigstens einen wenigstens eine ethylenisch ungesättigte Doppelbindung aufweisenden Monomeren in das dispergierte Polymerisat ist erfindungsgemäß ohne Belang. Er kann unmittelbar über ionische oder radikalische Polymerisation, über polymeranaloge Umsetzungen oder durch unmittelbare Polyaddition oder Polykondensation erfolgen. Ferner sei nochmals festgehalten, daß die Terminologie "wäßrige Polymerisatdispersion" ohne weiteren Zusatz in dieser Schrift sowohl wäßrige Primär- als auch wäßrige Sekundärdispersionen umfaßt.

Die Herstellung wäßriger Polymerisatdispersionen der vorgenannten verschiedenen Polymerisattypen ist vielfach vorbeschrieben und dem Fachmann daher hinreichend bekannt (vgl. z.B. Encyclopedia of Polymer Science and Engineering, Vol. 8, S. 659ff (1987): D.C. Blackley, in High Polymer Latices, Vol. 1, S. 35ff (1966); H. Warson, The Applications of Synthetic Resin Emulsions, Seite 246ff, Kapitel 5 (1972); D. Diederich, Chemie in unserer Zeit 24, S. 135 bis 142 (1990); Emulsion Polymerization, Interscience Publishers, New York (1965); DE-A 40 03 422 und Dispersionen synthetischer Hochpolymerer, F. Hölscher, Springer-Verlag, Berlin (1969)).

Als wenigstens eine ethylenisch ungesättigte Gruppe aufweisende Monomere kommen für das erfindungsgemäße Verfahren u.a. insbesondere in einfacher Weise radikalisch polymerisierbare Monomere in Betracht wie die Olefine, z.B. Ethylen, vinylaromatische Monomere wie Styrol, α-Methylstyrol, o-Chlorstyrol oder Vinyltoluole, Ester aus Vinylalkohol und 1 bis 18 C-Atome aufweisenden Monocarbonsäuren wie Vinylacetat, Vinylpropionat, Vinyl-n-butyrat, Vinyllaurat, Vinylpivalat und Vinylstearat sowie im Handel befindliche Monomere VEOVA® 9-11 (VEOVA X ist ein Handelsname der Firma Shell und steht für Vinylester von Carbonsäuren, die auch als Versatic® X-Säuren bezeichnet werden), Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie besonders Acrylsäure- und Methacrylsäuremethyl-, -ethyl, -n-butyl, -iso-butyl, -tert.-butyl und -2-ethylhexylester, Maleinsäuredimethylester oder Maleinsäure-n-butylester, Nitrile α,β-monoethylenisch ungesättigter Carbonsäuren wie Acrylnitril sowie C₄₋₈-konjugierte Diene wie 1,3-Butadien und Isopren. Die genannten Monomeren bilden im Fall von ausschließlich nach der Methode der radikalischen wäßrigen Emulsionspolymerisation erzeugten wäßrigen Polymerisatdispersionen in der Regel die Hauptmonomeren, die, bezogen auf die Gesamtmenge der nach dem Verfahren der radikalischen wäßrigen Emulsionspolymerisation zu polymerisierenden Monomeren normalerweise einen Anteil von mehr als 50 Gew.-% auf sich vereinen. In aller Regel weisen diese Monomeren in Wasser bei Normalbedingungen (25°C, 1 atm) lediglich eine mäßige bis geringe Löslichkeit auf.

Monomere, die unter den vorgenannten Bedingungen eine erhöhte Wasserlöslichkeit aufweisen, sind beispielsweise α,β-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon.

Im Fall von ausschließlich nach der Methode der radikalischen wäßrigen Emulsionspolymerisation erzeugten wäßrigen Polymerisatdispersionen werden die vorgenannten, eine erhöhte Wasserlöslichkeit aufweisenden, Monomeren im Normalfall lediglich als modifizierende Monomere in Mengen, bezogen auf die Gesamtmenge der zu polymerisierenden Monomeren, von weniger als 50 Gew.-%, in der Regel 0,5 bis 20, vorzugsweise 1 bis 10 Gew.-%, miteinpolymerisiert.

Monomere, die üblicherweise die innere Festigkeit der Verfilmungen der wäßrigen Polymerisatdispersionen erhöhen, weisen normalerweise wenigstens eine Epoxy-, Hydroxy-, N-Methylol- oder Carbonylgruppe oder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren sowie deren Ester mit 1 bis 4 C-Atome aufweisenden Alkenolen, unter denen das N-Methylolacrylamid und das N-Methylolmethacrylamid ganz besonders bevorzugt sind, zwei Vinylreste aufweisende Monomere, zwei Vinylidenreste aufweisende Monomere sowie zwei Alkenylreste aufweisende Monomere in Betracht. Besonders vorteilhaft sind dabei die

Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate wie Ethylenglykoldiacrylat, 1,3-Butylenglykoldiacrylat, 1,4-Butylenglykoldiacrylate sowie Propylenglykoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. In diesem Zusammenhang von besonderer Bedeutung sind auch die Methacrylsäure- und Acrylsäure C₁-C₈-Hydroxyalkylester wie Hydroxyethyl-, n-Hydroxypropyl- oder n-Hydroxybutylacrylat und -methacrylat sowie Verbindungen wie Diacetonacrylamid und Acetylacetoxyethylacrylat bzw. -methacrylat, Ureidoethylmethacrylat und Acrylamidoglykolsäure. Die vorgenannten Monomeren werden im Fall von ausschließlich nach der Methode der radikalischen wäßrigen Emulsionspolymerisation erzeugten wäßrigen Polymerisatdispersionen, bezogen auf die Gesamtmenge der zu polymerisierenden Monomeren, meist in Mengen von 0,5 bis 10 Gew.-% miteinpolymerisiert.

Der Vorteil der gleichförmigen Monomerenabsenkung des erfindungsgemäßen Verfahrens kommt insbesondere dann zur Geltung, wenn die zu beseitigenden Restmonomeren zwei oder mehr als zwei voneinander verschiedene wenigstens eine ethylenisch ungesättigte Gruppe aufweisende Monomeren umfassen. D.h. seine Anwendung erweist sich dann als günstig, wenn drei oder vier oder fünf oder sechs oder mehr voneinander verschiedene Restmonomere Bestandteil der erfindungsgemäß zu behandelnden wäßrigen Polymerisatdispersion sind.

Dies gilt vor allem dann, wenn die in der wäßrigen Polymerisatdispersion enthaltenen Restmonomeren so beschaffen sind, daß sie bei den Nachpolymerisationsbedingungen voneinander signifikant verschiedene molare Löslichkeiten L in 1000 g Wasser (- molale Löslichkeit in Wasser) aufweisen (in der Regel sind diese Löslichkeiten im wesentlichen mit denen bei 25°C, 1 bar, ca. identisch).

Bezeichnet man in einem Restmonomerengemisch dasjenige Restmonomere, das die höchste molale Löslichkeit L_{A} aufweist mit A und dasjenige Restmonomere, das die geringste molale Löslichkeit L_{B} aufweist mit B, dann tritt der erfindungsgemäße Erfolg im wesentlichen unabhängig davon ein, ob das Verhältnis L_{A}/L_{B} einen Wert ≥ 1,1 oder ≥ 1,5 oder ≥ 2 oder ≥ 5 oder ≥ 10 oder ≥ 50 oder ≥ 100 oder > 1000 oder > 100000 aufweist.

D.h. der erfindungsgemäße Erfolg tritt in der Regel ein, wenn die Restmonomeren wenigstens ein Restmonomeres, das in der vorseitigen Auflistung möglicher Restmonomere der Gruppe der mäßig bis gering in Wasser löslichen zugeordnet wurde, und wenigsten ein Restmonomeres, das in der entsprechenden Auflistung der Gruppe mit erhöhter Wasserlöslichkeit zugeordnet wurde, enthalten.

Der erfindungsgemäße Erfolg tritt auch dann ein, wenn das Restmonomerengemisch kein Chloropren umfaßt.

Der erfindungsgemäße Erfolg tritt insbesondere auch dann ein, wenn das Restmonomerengemisch wenigstens eines der nachfolgenden in Wasser in besonders geringem Ausmaß löslichen Monomeren Styrol, Butadien, n-Butylacrylat und 2-Ethylhexylacrylat und wenigstens eines der nachfolgenden in Wasser besonders gut löslichen Monomeren Acrylsäure, Methacrylsäure, Acrylamid und Methacrylamid beinhaltet. Aber auch wenn das Restmonomerengemisch bereits mäßig in Wasser lösliche Monomere wie Methylmethacrylat, Vinylacetat und/oder Acrylnitril neben wenigstens einem der vorgenannten als besonders gut löslich bezeichneten Monomeren aufweist, ist das erfindungsgemäße Verfahren zu empfehlen.

Erwähnenswert ist dabei insbesondere die bei Anwendung des erfindungsgemäßen Verfahrens in voll befriedigender Weise zu erzielende Absenkung des Restgehaltes an Acrylnitril, Vinylacetat und Acrylsäure, deren Beseitigung ganz generell als schwierig gilt.

Die im Rahmen des reduktiven Verbrauchs der erfindungsgemäß einzusetzenden Verbindung entstehenden Folgeprodukte mindern darüber hinaus die Qualität (insbesondere die Stabilität) wäßriger Polymerisatdispersionen allenfalls in geringem Ausmaß. Dies eröffnet die Möglichkeit, das erfindungsgemäße Verfahren und die Stabilität strapazierende Strippverfahren simultan anzuwenden, d.h. chemische und physikalische Restmonomerenverringerung direkt zu koppeln, wie es die US-A 4 529 753 empfiehlt. Ferner bildet dieser Sachverhalt die Grundlage dafür, daß das erfindungsgemäße Verfahren z.B. im Unterschied zur Restmonomerenbeseitigung durch Strippen mittels Wasserdampf ohne Schwierigkeiten im wesentlichen unabhängig vom Feststoffvolumengehalt (Feststoffvolumen, bezogen auf das Volumen der wäßrigen Polymerisatdispersion) anwendbar ist. D.h. der Feststoffvolumengehalt kann sowohl 10 bis 50 als auch 20 bis 60, aber auch 30 bis 70 Vol.-% betragen, wie dies z.B. bei den wäßrigen Polymerisatdispersionen der DE-A 42 13 965 der Fall ist, wobei die Anwendbarkeit bei hoher Feststoffvolumenkonzentration (50 bis 70 Vol.-% und höher) besonders interessiert.

Es gibt sogar eine Gruppe wäßriger Polymerisatdispersionen, deren Qualität sich bei Anwendung des erfindungsgemäßen Verfahrens über eine bloße Verringerung des Restmonomerengehaltes hinaus erhöht. Es handelt sich dabei um solche wäßrige Polymerisatdispersionen, zu deren Herstellung Substanzen mitverwendet werden, die Quellen für freien Formaldehyd bilden. Beispiele für solche Substanzen sind N-Alkylolamide und N-Alkoxyalkylamide ethylenisch ungesättigter Carbonsäuren wie N-Methylolacrylamid, N-Methylolmethacrylamid, N-(isobutoxymethyl)-acrylamid bzw. N-(isobutoxymethyl)-methacrylamid. Die Copolymerisation dieser Monomeren erhöht beispielsweise die innere Festigkeit der aus ihnen resultierenden Verfilmungen was beispielsweise bei Bindemitteln für Faservliese vorteilhaft ist.

Diese Hilfsmonomeren stehen jedoch in wäßrigem Medium ebenso im Gleichgewicht mit freiem Formaldehyd wie Hydroxymethansulfinsäure (Formaldehyd-Sulfoxylat) oder deren Salze, die als Reduktionsmittel in radikalischen Redoxinitiatoren zur Herstellung wäßriger Polymerisatdispersionen verwendet werden.

Bemerkenswerterweise weisen derartige freien Formaldehyd beinhaltende wäßrige Polymerisatdispersionen, wie sie z.B. in der DE-C 40 40 959, der EP-A 311 908 und der EP-A 147 759 offenbart werden, nach Anwendung des erfindungsgemäßen Verfahrens einen reduzierten Gehalt an freiem Formaldehyd auf.

Die Anwendbarkeit des erfindungsgemäßen Verfahrens ist sowohl bei alkalischem als auch saurem wäßrigem Dispergiermedium gegeben. D.h. der Anwendungsbereich erstreckt sich von pH 1 bis pH 12.

Die Anwendbarkeit im sauren pH-Bereich ist z.B. dann von Bedeutung, wenn die wäßrige Polymerisatdispersion ≥ 5 bis 60 Gew.-% Acrylsäure, auf das Polymerisat bezogen, copolymerisiert enthält. Erhöht man den pH-Wert wäßriger Dispersionen von Polymerisaten des vorgenannten Acrylsäuregehalts, so nimmt deren dynamische Viskosität beträchtlich zu. Mit Vorteil werden derartige wäßrige Polymerisatdispersionen daher als Verdickerdispersionen eingesetzt (vgl. z.B. DE-PS 11 64 095, DE-PS 12 64 945, DE-PS 12 58 721, DE-PS 15 46 315 und DE-PS 12 65 752). Diesbezüglich werden sie in saurem Medium mit relativ geringer Viskosität erzeugt. Die verdickende Wirkung wird erst beim Anwender durch pH-Wert-Erhöhung bewirkt. Damit liegt einer der Fälle vor, bei denen die Restmonomerenverringerung beim Hersteller der wäßrigen Polymerisatdispersion bei pH-Werten des wäßrigen Dispergiermediums von unter 7 (in der Regel < 7 bis 2) durchzuführen ist.

Vorzugsweise wird das erfindungsgemäße Verfahren jedoch bei pH-Werten des wäßrigen Dispergiermediums von 6 bis 10, besonders bevorzugt 7 bis 9, angewendet. Dies ist für solche wäßrigen Polymerisatdispersionen günstig, deren disperse Verteilung unter Mitwirkung anionischer Gruppen stabilisiert wird. Dies sind beispielsweise solche wäßrigen Polymerisatdispersionen, die unter Mitwirkung anionischer Emulgatoren stabilisiert werden, oder die 3 bis 6 C-Atome enthaltende α,β-monoethylenisch ungesättigte Carbonsäuren wie Acrylsäure einpolymerisiert enthalten (in der Regel 0,1 bis 5, vorzugsweise 0,5 bis 4 Gew.-%, bezogen auf das dispergierte Polymerisat), um die disperse Verteilung allein oder mitzustabilisieren.

Bemerkenswerterweise ist es im Fall der erfindungsgemäßen Restmonomerenverringerung (auch bei Anwendungstemperaturen von 20 bis 50°C) nicht erforderlich, das erfindungsgemäße Redoxinitiatorsystem im Beisein einer im wäßrigen Reaktionsmedium löslichen Metallverbindung, deren metallische Komponente (z.B. Eisen, Vanadium oder deren Gemisch) in mehreren Wertigkeitsstufen auftreten kann, anzuwenden. Selbstverständlich ist aber auch eine Anwendung in einem solchen Beisein möglich. In der Regel erfolgt diese dann in auf Oxidations- oder Reduktionsmittel (die jeweilige Unterschußkomponente) bezogenen Mengen von 0,01 bis 1 Gew.-%, gerechnet als zuzusetzende Metallverbindung. Als solche kommen beispielsweise Eisen(II)sulfat, Eisen(II)chlorid, Eisen(II)nitrat, Eisen(II)acetat sowie die entsprechenden Eisen(III)salze, Ammonium- oder Alkalimetallvanadate (V(V)), Vanadium(III)chlorid, Vanadyl(V)trichlorid und insbesondere Vanadyl(IV)sulfat-Pentahydrat in Betracht. Häufig werden noch Komplexbildner zugesetzt, die die Metalle unter Reaktionsbedingungen in Lösung halten.

Hinsichtlich der im Rahmen der erfindungsgemäßen Restmonomerenabsenkung anzuwendenden Temperaturen wird der Bereich von 0 bis 100°C, vorzugsweise 20 bis 90°C, insbesondere 50 bis 80°C, empfohlen. Unter Druck sind aber auch entsprechend höhere Temperaturen möglich. Als Arbeitsdruck kommen ≥ 1 bar bis 15 bar in Betracht. Besonders günstig ist es, die erfindungsgemäße Nachpolymerisation oberhalb der Mindestfilmbildetemperatur, MFT (Weißpunkt), der resultierenden wäßrigen Polymerisatdispersion durchzuführen. Bei wäßrigen Polymerisatdispersionen, deren MFT unterhalb 0°C liegt, tritt an die Stelle der MFT die statische Glasübergangstemperatur T_{g} (DSC, midpoint temperature) des dispergierten Polymerisats (vgl. Ullmann's Encyclopedia of Industrial Chemistry, VCH, Weinheim, Vol. A21 (1992), S. 169). Vorzugsweise liegt die Arbeitstemperatur wenigstens 20, besser wenigstens 40, günstiger wenigstens 60, noch besser wenigstens 80 und ganz besonders vorteilhaft wenigstens 100°C oberhalb der relevanten MFT- bzw. T_{g}-Werte (dieser Zshg. sollte allgemein für Nachpolymerisationen von Gültigkeit sein). Bei Polymerisatdispersionen, die mehr als eine T_{g} aufweisen, ist der tiefstliegende dieser Werte anzuwenden.

Wie die Verfahren der radikalischen Polymerisation generell, ist das erfindungsgemäße Verfahren sowohl unter Inertgasatmosphäre (z.B N₂, Ar) als auch unter Sauerstoff enthaltender Atmosphäre (z.B. Luft) anwendbar. Dabei ist es von erheblichem Vorteil, daß das erfindungsgemäß zu verwendende Reduktionsmittel bereits bei alleinigem Beisein von molekularem Sauerstoff als Oxidationsmittel eine signifikante Restmonomerenabsenkung zu bewirken vermag. Dieser Sachverhalt ist, zusammen mit den niederen erforderlichen Anwendungstemperaturen, insbesondere im Hinblick auf eine Restmonomerenabsenkung der wäßrigen Polymerisatdispersion im Lagertank derselben von Interesse. Ferner eröffnet er die Möglichkeit, den ansonsten erforderlichem Zusatz anderer Oxidationsmittel zu beschränken und so z.B. die biocide Ausrüstung der wäßrigen Polymerisatdispersion zu begünstigen.

Weiterhin ist es günstig, daß eine Anwendung des erfindungsgemäßen Verfahrens üblicherweise keine Verfärbung der resultierenden wäßrigen Polymerisatdispersionen bewirkt. Auch ist die ausgezeichnete Handhabbarkeit und Lagerstabilität des erfindungsgemäß anzuwendenden Reduktionsmittels von Vorteil.

Wie bereits erwähnt, ist das erfindungsgemäße Verfahren insbesondere auf solche wäßrigen Polymerisatdispersionen anwendbar, deren dispergiertes Polymerisat, abzüglich der erfindungsgemäßen Restmonomerenbeseitigung, nach der Methode der radikalischen wäßrigen Emulsionspolymerisation aus wenigstens eine ethylenisch ungesättigte Gruppe aufweisenden Monomeren erzeugt wird, weshalb sich sämtliche in dieser Schrift gemachten Aussagen vor allem auf solche nach der Methode der radikalischen wäßrigen Emulsionspolymerisation hergestellten wäßrigen Primärdispersionen beziehen. Dabei wird die radikalische wäßrige Emulsionspolymerisation vorzugsweise nach dem Zulaufverfahren durchgeführt. D.h. die überwiegende Menge der zu polymerisierenden Monomeren, in der Regel 50 bis 100, vorzugsweise 70 bis 100, besonders bevorzugt 80 bis 100 und ganz besonders vorteilhaft 90 bis 100 Gew.-% ihrer Gesamtmenge, werden dem Polymerisationsgefäß erst ab Beginn der radikalischen wäßrigen Emulsionspolymerisation gemäß des Fortschreitens der Polymerisation der bereits im Polymerisationsgefäß befindlichen Monomeren zugesetzt. In der Regel erfolgt der Zusatz durch kontinuierliche Zufuhr (in der Regel als reiner Monomerenzulauf oder in wäßriger Phase voremulgiert) und zwar so, daß wenigstens 80, bevorzugt wenigstens 90 und ganz besonders bevorzugt wenigstens 95 Gew.-% der bereits im Polymerisationsgefäß befindlichen Monomeren einpolymerisiert sind. Zur Einstellung der Teilchengröße der dispergierten Polymerisatpartikel können dabei sogenannte wäßrige Saat-Polymerisatdispersionen mitverwendet werden (vgl. EP-B 40419 u. Encyclopedia of Polymer Science and Technology, Vol. 5, John Wiley & Sons Inc., New York (1966) S. 847).

Als radikalische Polymerisationsinitiatoren kommen für die vorstehend beschriebene Hauptpolymerisationsreaktion alle diejenigen in Betracht, die in der Lage sind, eine radikalische wäßrige Emulsionspolymerisation auszulösen. Es kann sich dabei sowohl um Peroxide als auch um Azoverbindungen handeln. Selbstverständlich kommen jedoch auch Redoxinitiatorsysteme in Betracht. Im Regelfall wird das zur Hauptpolymerisation eingesetzte radikalische Initiatorsystem von dem erfindungsgemäß für die Nachpolymerisation zu verwendenden radikalischen Initiatorsystem verschieden sein. Auch werden in der Regel wenigstens 50 Gew.-%, häufiger wenigstens 75 Gew.-% und meistens wenigstens 90 Gew.-% der im Rahmen der Hauptpolymerisation zu polymerisierenden Monomeren ohne Beisein des erfindungsgemäßen Reduktionsmittels polymerisiert. D.h. im Normalfall wird die Hauptpolymerisation kein erfindungsgemäßes Reduktionsmittel umfassen. Um die radikalische wäßrige Emulsionspolymerisation als Hauptpolyreaktion aus der Sicht der gewünschten Eigenschaften sowie bezüglich einer hohen Wirtschaftlichkeit besonders effizient zu führen, ist die Verwendung von Peroxodischwefelsäure und/oder deren Alkalimetallsalzen und/oder ihrem Ammoniumsalz als radikalische Starter bevorzugt. Vorzugsweise beträgt die Menge der eingesetzten radikalischen Initiatorsysteme, bezogen auf die Gesamtmenge der zu polymerisierenden Monomeren, 0,1 bis 2 Gew.-%. Die Art und Weise, in der das radikalische Initiatorsystem im Verlauf der beschriebenen radikalischen wäßrigen Emulsionshauptpolymerisation dem Polymerisationsgefäß zugegeben wird, ist eher von untergeordneter Bedeutung. Das Initiatorsystem kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise zugesetzt werden. Im einzelnen hängt dies in an sich dem Durchschnittsfachmann bekannter Weise sowohl von der chemischen Natur des Initiatorsystems als auch von der Polymerisationstemperatur ab.

Eine unmittelbare Konsequenz der vorgenannten Tatsache ist, daß als Reaktionstemperatur für die vorgenannte radikalische wäßrige Emulsionshauptpolymerisation der gesamte Bereich von 0 bis 100°C in Betracht kommt, Temperaturen von 70 bis 100°C, vorzugsweise 80 bis 100°C und besonders bevorzugt > 85 bis 100°C jedoch bevorzugt angewendet werden.

Die Anwendung von erhöhtem oder vermindertem Druck ist möglich, so daß die Polymerisationstemperatur auch 100°C übersteigen und bis zu 130°C oder mehr betragen kann. Vorzugsweise werden leichtflüchtige Monomere wie Ethylen, Butadien oder Vinylchlorid unter erhöhtem Druck polymerisiert. Natürlich ist es möglich, im Rahmen der radikalischen wäßrigen Emulsionshauptpolymerisation das Molekulargewicht regelnde Substanzen wie tert.-Dodecylmercaptan mitzuverwenden.

Üblicherweise werden im Rahmen der radikalischen wäßrigen Emulsionspolymerisation Dispergiermittel mitverwendet, die die Stabilität der erzeugten wäßrigen Polymerisatdispersion gewährleisten. Als solche kommen sowohl die zur Durchführung von radikalischen wäßrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Selbstverständlich können auch Gemische aus Emulgatoren und/oder Schutzkolloiden verwendet werden. Vorzugsweise werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nicht-ionischen Emulgatoren verträglich. Desgleichen gilt auch für kationische Emulgatoren, während anionische und kationische Emulgatoren meistens miteinander unverträglich sind. Gebräuchliche Emulgatoren sind z.B. ethoxylierte Mono-, Di- und Tri-Alkylphenole (EO-Grad: 3 bis 100, Alkylrest: C₄ bis C₁₂), ethoxylierte Fettalkohole (EO-Grad: 3 bis 100, Alkylrest: C₈ bis C₁₈), sowie Alkali- und Ammoniumsalze von Alkylsulfaten (Alkylrest: C₈ bis C₁₆), von Schwefelsäurehalbestern ethoxylierter Alkanole (EO-Grad: 1 bis 70, Alkylrest: C₁₂ bis C₁₈) und ethoxylierter Alkylphenole (EO-Grad: 3 bis 100, Alkylrest: C₄ bis C₁₂), von Alkylsulfonsäuren (Alkylrest: C₁₂ bis C₁₈) und von Alkylarylsulfonsäuren (Alkylrest: C₉ bis C₁₈). Weitere geeignete Emulgatoren wie Sulfobernsteinsäureester finden sich in Houben-Weyl, Methoden der organischen Chemie, Band XIV/1, Makromolekulare Stoffe, Georg-Thieme Verlag, Stuttgart, 1961, Seiten 192 bis 208.
Als geeignete grenzflächenaktive Substanzen haben sich ferner Verbindungen der allgemeinen Formel I 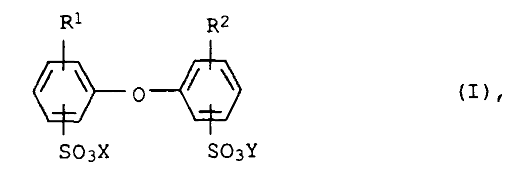 worin R¹ und R² Wasserstoff oder C₄- bis C₂₄-Alkyl bedeuten und nicht gleichzeitig Wasserstoff sind, und X und Y Alkalimetallionen und/oder Ammoniumionen sein können, erwiesen. In der Formel I bedeuten R¹ und R² bevorzugt lineare oder verzweigte Alkylreste mit 6 bis 18 C-Atomen oder Wasserstoff, und insbesondere mit 6,12 und 16 C-Atomen, wobei R¹ und R² nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen I in denen X und Y Natrium, R¹ ein verzweigter Alkylrest mit 12 C-Atomen und R² Wasserstoff oder R¹ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Vorzugsweise werden die Verbindungen I im erfindungsgemäßen Verfahren für sich und besonders bevorzugt im Gemisch mit ethoxylierten Fettalkoholen (EO-Grad: 3 bis 50, Alkylrest: C₈- bis C₃₆) als Dispergiermittel eingesetzt. Die Verbindungen I sind allgemein bekannt, z.B. aus der US-A 4,269,749, und im Handel erhältlich.

In der Regel beträgt die Menge an eingesetztem Dispergiermittel 0,5 bis 6, vorzugsweise 1 bis 3 Gew.-% bezogen auf die radikalisch zu polymerisierenden Monomeren.

Selbstverständlich eignen sich die vorgenannten Dispergiermittel ganz generell zur Stabilisierung der erfindungsgemäßen unmittelbaren Verfahrensprodukte. Die erfindungsgemäßen unmittelbaren Verfahrensprodukte umfassen aber auch wäßrige Polymerisatdispersionen von selbstemulgierenden Polymerisaten, d.h. von Polymerisaten die ionische Gruppen aufweisen, die aufgrund der Abstoßung von Ladungen gleichen Vorzeichens die Stabilisierung zu bewirken vermögen. Bevorzugt weisen die erfindungsgemäßen unmittelbaren Verfahrensprodukte anionische Stabilisierung (insbesondere anionische Dispergiermittel) auf.

Erfolgt die Herstellung derjenigen wäßrigen Polymerisatdispersion, deren Restmonomerengehalt in der erfindungsgemäßen Weise gesenkt werden soll, nach der Methode der radikalischen wäßrigen Emulsionspolymerisation aus Monomerenzusarmnensetzungen von wenigstens eine ethylenisch ungesättigte Gruppe aufweisenden Monomeren, sind im Hinblick auf das erfindungsgemäße Verfahren insbesondere Monomerenzusammensetzungen von Bedeutung, die wenigstens zwei voneinander verschiedene wenigstens eine ethylenisch ungesättigte Gruppe aufweisende Monomeren umfassen und im übrigen
- 70 bis 99,9 Gew.-% Ester der Acryl- und/oder Methacrylsäure mit 1 bis 12 C-Atome aufweisenden Alkanolen und/oder Styrol,
   oder
- 70 bis 99,9 Gew.-% Styrol und/oder Butadien,
   oder
- 70 bis 99,9 Gew.-% Vinylchlorid und/oder Vinylidenchlorid,
   oder
- 40 bis 99,9 Gew.-% Vinylacetat, Vinylpropionat und/oder
   Ethylen
enthalten.

Besonders relevant sind im Hinblick auf das erfindungsgemäße Verfahren Monomerenzusammensetzungen, die umfassen:
- 0,1 bis 5 Gew.-%: wenigstens einer 3 bis 6 C-Atome aufweisenden α,β-monoethylenisch ungesättigten Carbonsäure und/oder deren Amid (Monomere A) und
- 70 bis 99,9 Gew.-%: an Estern der Acryl- und/oder Methacrylsäure mit 1 bis 12 C-Atome aufweisenden Alkanolen und/oder Styrol (Monomere B),
oder
- 0,1 bis 5 Gew.-%: wenigstens einer 3 bis 6 C-Atome aufweisenden α,β-monoethylenisch ungesättigten Carbonsäure und/oder deren Amid (Monomere A) und
- 70 bis 99,9 Gew.-%: Styrol und/oder Butadien (Monomere B'),
oder
- 0,1 bis 5 Gew.-%: wenigstens einer 3 bis 6 C-Atome aufweisenden α,β-monoethylenisch ungesättigten Carbonsäure und/oder deren Amid (Monomere A) und
- 70 bis 99,9 Gew.-%: Vinylchlorid und/oder Vinylidenchlorid (Monomere B"),
oder
- 0,1 bis 5 Gew.-%: wenigstens einer 3 bis 6 C-Atome aufweisenden α,β-monoethylenisch ungesättigten Carbonsäure und/oder deren Amid (Monomere A) und
- 40 bis 99,9 Gew.-%: Vinylacetat, Vinylpropionat und/oder Ethylen (B‴).

Von ganz besonderer Relevanz ist das erfindungsgemäße Verfahren im Fall der vorgenannten Monomerenzusammensetzungen dann, wenn das Monomere A Acrylsäure ist.

Darüber hinaus ist das erfindungsgemäße Verfahren empfehlenswert im Fall von radikalischen wäßrigen Emulsionspolymerisationen von Monomerenzusammensetzungen die umfassen:
- 0,1 bis 30 Gew.-%: Acrylnitril (vorzugsweise 0,5 bis 15 Gew.-%) und
- 70 bis 99,9 Gew.-%: Ester der Acryl- und/oder Methacrylsäure mit 1 bis 12 C-Atome aufweisenden Alkanolen und/oder Styrol,
oder
- 0,1 bis 30 Gew.-%: Acrylnitril (vorzugsweise 0,5 bis 15 Gew.-%) und
- 70 bis 99,9 Gew.-%: Styrol und/oder Butadien,
oder
- 0,1 bis 40 Gew.-%: Vinylacetat und/oder Vinylpropionat und
- 60 bis 99,9 Gew.-%: Ester der Acryl- und/oder Methacrylsäure mit 1 bis 12 C-Atome aufweisenden Alkanolen und/oder Styrol.

Ganz besonders empfehlenswert ist das erfindungsgemäße Verfahren jedoch im Fall von radikalischen wäßrigen Emulsionspolymerisationen von Monomerenzusammensetzungen die umfassen:
- 0,1 bis 5 Gew.-%: wenigstens einer 3 bis 6 C-Atome aufweisenden α,β-monoethylenisch ungesättigten Carbonsäure und/oder deren Amid, insbesondere Acrylsäure,
- 0,1 bis 30 Gew.-%: Acrylnitril (vorzugsweise 0,5 bis 15 Gew.-%) und
- 69,9 bis 99,9 Gew.-%: Ester der Acryl- und/oder Methacrylsäure mit 1 bis 12 C-Atome aufweisenden Alkanolen und/oder Styrol
oder
- 0,1 bis 5 Gew.-%: wenigstens einer 3 bis 6 C-Atome aufweisenden α,β-monoethylenisch ungesättigten Carbonsäure und/oder deren Amid, insbesondere Acrylsäure,
- 0,1 bis 30 Gew.-%: Acrylnitril (vorzugsweise 0,5 bis 15 Gew.-%) und
- 69,9 bis 99,9 Gew.-%: Styrol und/oder Butadien,
oder
- 0,1 bis 5 Gew.-%: wenigstens einer 3 bis 6 C-Atome aufweisenden α,β-monoethylenisch ungesättigten Carbonsäure und/oder deren Amide, insbesondere Acrylsäure,
- 0,1 bis 40 Gew.-%: Vinylacetat und/oder Vinylpropionat und
- 59,9 bis 99,9 Gew.-%: Ester der Acryl- und/oder Methacrylsäure mit 1 bis 12 C-Atome aufweisenden Alkanolen und/oder Styrol.

Vorzugsweise umfassen die genannten Monomerenzusammensetzungen kein Chloropren und werden so gewählt, daß die Tg-Werte der resultierenden dispergierten Polymerisate unterhalb 50°C, vorzugsweise unterhalb 25°C und ganz besonders bevorzugt unterhalb 0°C (bis zu -70°C) liegen.

Im Fall von Restmonomere enthaltenden wäßrigen Polymerisatdispersionen, deren dispergiertes Polymerisat aus wenigstens eine ethylenisch ungesättigte Gruppe aufweisenden Monomeren nach der radikalischen wäßrigen Emulsionspolymerisation erzeugt wird, wird man in der Regel bereits im Rahmen dieser radikalischen wäßrigen Emulsionshauptpolymerisation die 1 Gew.-%-Grenze an auf die gesamte wäßrige Dispersion bezogenen Restmonomeren erreichen oder unterschreiten. In den Fällen, in denen dies nicht möglich ist, kann man, wie bereits erwähnt, das erfindungsgemäße Verfahren der Restmonomerenabsenkung entweder unmittelbar im Anschluß anwenden oder bis zum Erreichen der vorgenannten Grenze zunächst nach den an sich bekannten Methoden zur Restmonomerenverringerung des Standes der Technik verfahren, ehe man erfindungsgemäß weiterverfährt, um die Vorteile des erfindungsgemäßen Verfahrens zu nutzen. Generell können die Hauptpolyreaktion und der erfindungsgemäße Schritt der Restmonomerenabsenkung nahtlos ineinander übergehen. Auch kann das erfindungsgemäße radikalische Redoxinitiatorsystem bereits im Rahmen der Hauptpolyreaktion mitverwendet worden sein.

Selbstverständlich können die erfindungsgemäß anzuwendenden radikalischen Redoxinitiatoren neben der Aminoiminomethansulfinsäure zusätzlich andere Reduktionsmittel wie reduzierende Zucker, z.B. Glucose und Fructose, Derivate derselben wie Ascorbinsäure oder Sulfinsäuren wie Hydroxymethansulfinsäure oder Alkylsulfinsäuren wie iso-Propylsulfinsäure (bzw. deren Salze) umfassen. Vorzugsweise bildet die Aminoiminomethansulfinsäure jedoch mehr als 50, vorzugsweise mehr als 75 Gew.-% der Gesamtmenge an verwendeten Reduktionsmitteln und ganz besonders bevorzugt bildet sie das alleinige Reduktionsmittel. Anstelle einer unmittelbaren Zugabe als Aminoiminomethansulfinsäure kann das erfindungsgemäße Reduktionsmittel auch z.B. in situ durch Zusatz von Thioharnstoff und Wasserstoffperoxid erzeugt werden.

Als oxidativer Bestandteil der erfindungsgemäß anzuwendenden radikalischen Redoxinitiatoren kommen z.B. molekularer Sauerstoff, Ozon, unter Radikalbildung Sauerstoff abgebende Mittel ohne Peroxidstruktur wie Alkalimetallchlorate- und -perchlorate, Übergangsmetalloxidverbindungen wie Kaliumpermanganat, Mangandioxid und Bleioxid, aber auch Bleitetraacetat und Iodbenzol in Betracht. Vorzugsweise werden jedoch Peroxide, Hydroperoxide oder Gemische derselben eingesetzt.

Als besonders günstig haben sich dabei Wasserstoffperoxid, Peroxodischwefelsäure und ihre Salze, insbesondere ihre Alkalimetallsalze, tert.-Butylhydroperoxid und deren Anwendung mit Sauerstoff erwiesen. Vorzugsweise wird ausschließlich tert.- Butylhydroperoxid bzw. tert.-Butylhydroperoxid und Sauerstoff verwendet.

Oxidationsmittel und Reduktionsmittel sollten in der Regel im Rahmen des erfindungsgemäßen Verfahrens in einem molaren Verhältnis von 0,1:1 bis 1:0,1, vorzugsweise 0,5:1 bis 1:0,5 und besonders bevorzugt 0,75:1 bis 1:0,75 angewendet werden. Vorzugsweise werden sie in äquivalenten Mengen eingesetzt.

Im Rahmen des erfindungsgemäßen Verfahrens kann das erfindungsgemäß zu verwendende radikalische Redoxinitiatorsystem der die Restmonomeren enthaltenden wäßrigen Polymerisatdispersion prinzipiell auf einmal zugesetzt werden. Man kann aber auch das Oxidationsmittel auf einmal zusetzen und dann das Reduktionsmittel kontinuierlich zuführen. Es ist jedoch auch möglich, das Oxidationsmittel und das Reduktionsmittel der zu behandelnden wäßrigen Polymerisatdispersion im Verlauf weniger Stunden kontinuierlich über getrennte Zuläufe zuzuführen. Häufig werden beide Zuläufe im wesentlichen zeitgleich beginnen und enden, d.h. im wesentlichen wird die Zufuhr synchron erfolgen. Zweckmäßigerweise erfolgt die Zufuhr in Form wäßriger Lösungen.

Die anzuwendenden Mengen des erfindungsgemäß einzusetzenden radikalischen Redoxinitiatorsystems hängen selbstredend von der noch vorhandenen Menge an Restmonomeren und deren gewünschtem Verringerungsgrad ab.

In der Regel wird sich die einzusetzende Menge auf 0,01 bis 5 Gew.-%, mit Vorteil auf 0,1 bis 1 Gew.-%, bezogen auf das dispergierte Polymerisat, belaufen. Natürlich ist es möglich im Anschluß an das erfindungsgemäße Verfahren andere Verfahren zur Restmonomerenabsenkung anzuschließen.

Abschließend sei noch erwähnt, daß die erfindungsgemäß einzusetzenden radikalischen Redoxinitiatorsysteme eine wirksame Restmonomerenabsenkung in kurzer Zeit ermöglichen. Die in den nachfolgenden Beispielen ermittelten Restmonomerengehalte gehen auf gaschromatographische Bestimmungen zurück.

Beispiele und Vergleichsbeispiele
A) Herstellung einer Restmonomere aufweisenden wäßrigen Polymerisatdispersion (Inertgasatmosphäre)
In einem Polymerisationsgefäß wurden 200 g entsalztes Wasser, 40 g Zulauf 1, 12,5 g einer 20 gew.-%igen wäßrigen Lösung eines ethoxylierten Fettalkoholgemisches (C₁₆/C₁₈, EO-Grad: 18), 5 g einer 20 gew.-%igen wäßrigen Lösung des Dowfax 2A1 entsprechenden Wirkstoffs und 10 g des Zulaufs 2 als Gemisch unter Rühren vorgelegt und auf 85°C erwärmt. Nach 15 min wurden zeitgleich beginnend über getrennte Zuläufe die Restmenge an Zulauf 1 (innerhalb von 3 h) sowie die Restmenge an Zulauf 2 (innerhalb von 3,5 h) dem Polymerisationsgefäß kontinuierlich zugeführt (unter Aufrechterhaltung der 85°C). Nach Beendigung von Zulauf 2 wurde noch 1 h bei 85°C gerührt.
Zulauf 1 (wurde während der Zufuhr gerührt):

| | |
|---|---|
| 165 g | entsalztes Wasser, |
| 25 g | 20 gew.-%ige wäßrige Lösung eines ethoxylierten Fettalkoholgemisches (C₁₆/C₁₈, EO-Grad: 18), |
| 32,5 g | 20 gew.-%ige wäßrige Lösung des Dowfax 2A1 entsprechenden Wirkstoffs, |
| 10 g | 50 gew.-%ige wäßrige Acrylamidlösung, |
| 12,5 g | Acrylsäure, |
| 250 g | Styrol, |
| 250 g | n-Butylacrylat. |

Zulauf 2:

| | |
|---|---|
| 100 g | entsalztes Wasser, |
| 1 g | Natriumperoxidisulfat. |

Es wurde eine wäßrige Polymerisatdispersion A erhalten, deren Feststoffgehalt 48,3 Gew.-% betrug und die bei Verdünnung auf 0,01 Gew.-% Feststoffgehalt eine auf reines Wasser bezogene Lichtdurchlässigkeit bei 25°C (2,5 cm Schichtdicke) von 81 % aufwies (LD-Wert).
Das wäßrige Dispergiermedium wies einen pH-Wert von 2,7 auf. Sechs Ansätze der vorstehend beschriebenen Art wurden vereinigt. Die Vereinigung wies die nachfolgenden Restmonomerengehalte auf:

| | |
|---|---|
| n-Butylacrylat | 12000 mg/kg Dispersion; |
| Styrol | 2000 mg/kg Dispersion; |

B) Restmonomerenabsenkung der wäßrigen Polymerisatdispersion A durch Nachpolymerisation in Anwendung verschiedener radikalischer Redoxinitiatorsysteme (eingesetzt wurden jeweils 200 g der oben beschriebenen Vereinigung)
Bei definiertem Ausgangs-pH-Wert des wäßrigen Dispersionsmediums wurde jeweils eines der drei nachfolgenden Verfahren angewendet (die Erhöhung des Ausgangs-pH-Wertes erfolgte mittels 10 gew.-%iger wäßriger NaOH-Lösung):
a) Der wäßrigen Polymerisatdispersion A wurden ausgewählte Oxidations- und Reduktionsmittel (Mengenangabe jeweils in Gew.-%, bezogen auf das dispergierte Polymerisat) als 2 gew.-%ige wäßrige Lösungen auf einmal zugesetzt und anschließend das Gemisch bei 23°C während einer Zeitdauer X im geschlossenen Gefäß sich selbst überlassen (Inertgasatmosphäre, N₂). Unmittelbar danach erfolgte die Restmonomerenbestimmung.
b) Die wäßrige Polymerisatdispersion A wurde auf 70°C erwärmt und das ausgewählte Oxidationsmittel als 2 gew.-%ige wäßrige Lösung auf einmal zugesetzt. Unter Aufrechterhaltung der 70°C wurde das Reduktionsmittel als 2 gew.-%ige wäßrige Lösung innerhalb von 30 min kontinuierlich zudosiert. Danach wurde das Gemisch weitere 30 min bei 70°C gerührt. Anschließend wurde entweder die Nachpolymerisation durch Zusatz von 10 mg Hydrochinon gestoppt und das Gemisch gaschromatographisch analysiert (Variante b*) oder die Proben wurden drei weitere Tage im geschlossenen Gefäß bei 23°C sich selbst überlassen (Variante b) und dann analysiert (Inertgasatmosphäre, N₂). Die Mengenangaben an Oxidations- bzw. Reduktionsmitteln werden wiederum in Gew.-% auf das dispergierte Polymerisat bezogen.
c) Der wäßrigen Polymerisatdispersion A wurde ausschließlich Reduktionsmittel als 2 gew.-%ige wäßrige Lösung auf einmal zugesetzt und die Dispersion 3 Tage bei 23°C im an Luft geöffnet stehenden Gefäß sich selbst überlassen. Anschließend wurde gaschromatographisch analysiert. Die Mengenangabe an zugesetztem Reduktionsmittel erfolgt wiederum in Gew.-% auf das dispergierte Polymerisat bezogen.

In allen erfindungsgemäßen Fällen lag der resultierende Gesamtrestmonomerengehalt weit unter 1 Gew.-%, bezogen auf dispergiertes Polymerisat.
Die erhaltenen Ergebnisse zeigt die nachfolgende Tabelle 1. Der Buchstabe V kennzeichnet die Vergleichsbeispiele. 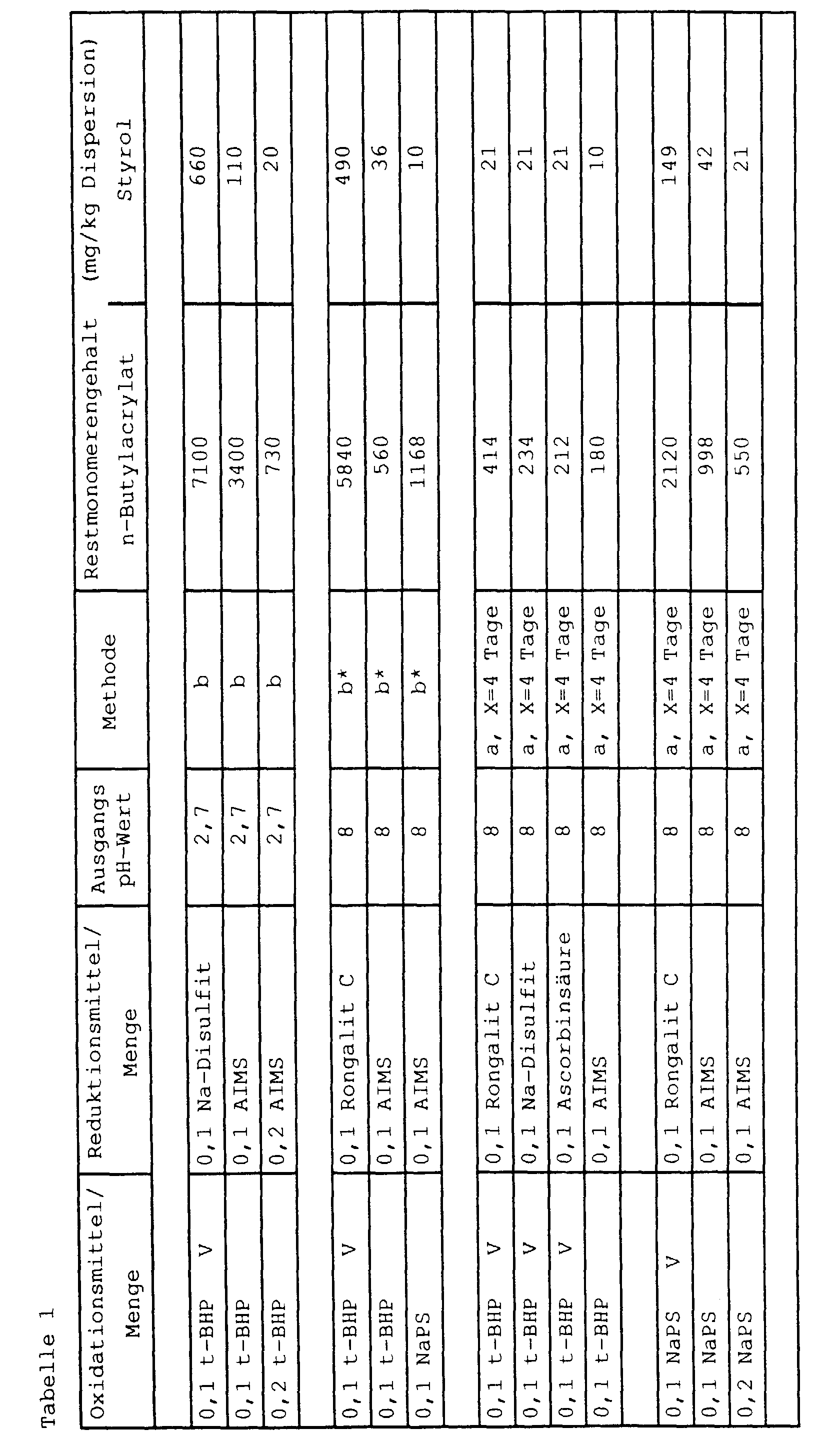 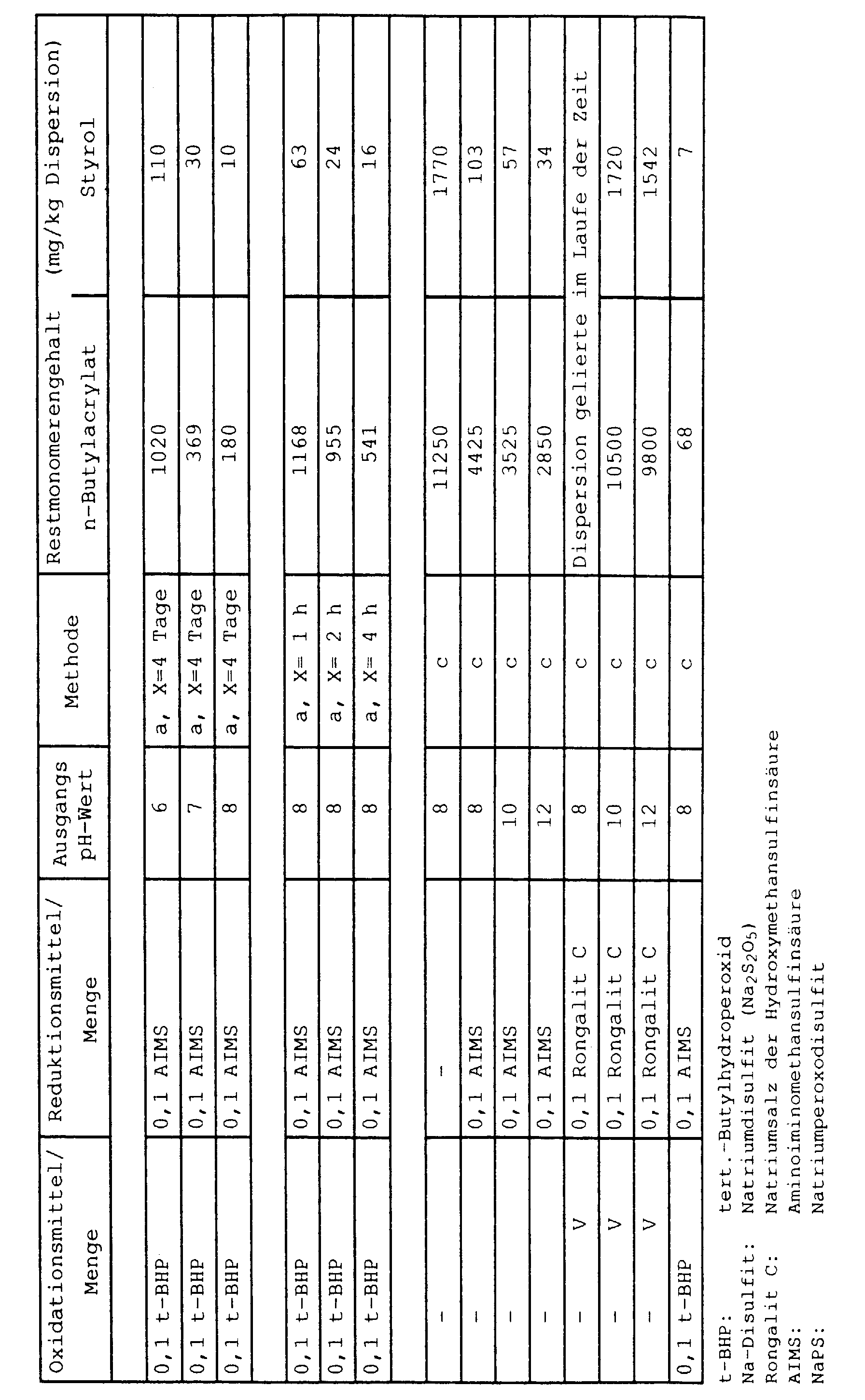
C) Hauptemulsionspolymerisation (Inertgasatmosphäre)
Ein Gemisch aus 10 g einer 30 gew.-%igen Wasserstoffperoxid-Lösung, 48 g Zulauf und 500 g entsalztes Wasser wurde auf 60°C erhitzt. Anschließend wurden unter Aufrechterhaltung einer Temperatur von 50°C 10 g einer Lösung von 3 g Ascorbinsäure in 200 g Wasser auf einmal zugesetzt und 15 min bei 50°C gerührt. Anschließend wurde die Restmenge des Zulaufs unter Aufrechterhaltung einer Temperatur von 60°C während 120 min kontinuierlich zugeführt und das Reaktionsgemisch nach beendetem Zulauf noch 60 min bei 60°C gerührt.
Die resultierende wäßrige Polymerisatdispersion wies einen Feststoffgehalt von 48,2 Gew.-% auf.
Der pH-Wert des Dispergiermediums betrug 2,9.
Zusammensetzung Zulauf:

| | |
|---|---|
| 1190 g | Ethylacrylat, |
| 150 g | Acrylnitril, |
| 120 g | Methylacrylat, |
| 78 g | 48 gew.-%ige wäßrige N-Methylolmethacrylamid-Lösung, |
| 64 g | einer 35 gew.-%igen wäßrigen Lösung des Natriumsalzes von sulfatiertem Octylphenolethoxylat (EO-Grad: 25) = Emulgatorlösung 1, |
| 112 g | einer 20 gew.-%igen wäßrigen Lösung von ethoxyliertem Octylphenol (EO-Grad: 25) = Emulgatorlösung 2, |
| 670 g | entsalztes Wasser. |

Der Restmonomerengehalt der wäßrigen Polymerisatdispersion umfaßte

| | |
|---|---|
| 6500 mg | Ethylacrylat /kg Dispersion, |
| 800 mg | Methylacrylat/kg Dispersion und |
| 770 mg | Acrylnitril /kg Dispersion. |

Nachpolymerisation (Inertgasatmosphäre)
Der pH-Wert von jeweils 200 g der bei der Hauptemulsionspolymerisation erhaltenen wäßrigen Polymerisatdispersion wurde mit konzentriertem Ammoniak auf 7,1 erhöht. Anschließend wurde bei 25°C das Oxidationsmittel auf einmal zugesetzt (Mengenangabe in Gew.-%, bezogen auf dispergiertes Polymerisat). Nach 10 min Rühren wurde Aminoiminomethansulfinsäure auf einmal zugesetzt (Mengenangabe in Gew.-%, bezogen auf dispergiertes Polymerisat) sowie 20 mg FeSO₄·7H₂O und danach 2 h bei 25°C gerührt. Dann wurde die wäßrige Polymerisatdispersion noch 24 h bei 25°C sich selbst überlassen. Der danach bestimmte Restmonomerengesamtgehalt lag in allen Fällen weit unterhalb von 1 Gew.-%, bezogen auf dispergiertes Polymerisat.
Die spezifischen Ergebnisse und Einsatzmengen weist Tabelle 2 aus.

**Tabelle 2**

| Oxidationsmittel/ Menge | Reduktionsmittel/ Menge | Restmonomerengehalt (mg/kg Dispersion) | | |
|---|---|---|---|---|
| | | Ethylacrylat | Methylacrylat | Acrylnitril |
| 0,2 t-BHP | 0,24 AIMS | 760 | 150 | 72 |
| 0,076 H₂O₂ | 0,24 AIMS | 780 | 160 | 77 |
| 0,53 NaPS | 0,24 AIMS | 1000 | 190 | 100 |
| 0,2 t-BHP | 0,48 AIMS | 220 | 90 | 12 |
| 0,076 H₂O₂ | 0,48 AIMS | 520 | 120 | 40 |
| 0,53 NaPS | 0,48 AIMS | 690 | 150 | 60 |

(Die Abkürzungen entsprechen jenen aus Tabelle 1)
Wie C), die Zugaben und die Nachpolymerisation erfolgten jedoch bei 60°C. Die Ergebnisse und Einsatzmengen weist Tabelle 3 aus. Die gewählten Abkürzungen entsprechen jenen aus Tabelle 1.

**Tabelle 3**

| Oxidationsmittel/ Menge | Reduktionsmittel/ Menge | Restmonomerengehalt (mg/kg Dispersion) | | |
|---|---|---|---|---|
| | | Ethylacrylat | Methylacrylat | Acrylnitril |
| 0,2 t-BHP | 0,24 AIMS | <10 | 36 | <10 |
| 0,076 H₂O₂ | 0,24 AIMS | 126 | 10 | <10 |

E) Hauptemulsionspolymerisation (Inertgasatmosphäre)
Ein Gemisch aus 2,6 g einer 40 gew.-%igen wäßrigen Lösung des Na-Salzes eines C₁₆-Paraffinsulfonates (Emulgatorlösung 3), 4,2 g Natriumvinylsulfonat, 15 mg FeSO₄·7H₂O, 625 g entsalztes Wasser und 80 g Zulauf 1 wurde auf 85°C erhitzt. Anschließend wurden unter Aufrechterhaltung von 70°C 58 g Zulauf 2 auf einmal zugesetzt und 15 min gerührt. Danach wurden unter Aufrechterhaltung von 85°C zeitgleich beginnend die Restmenge an Zulauf 1 (innerhalb von 120 min) und Zulauf 2 (innerhalb von 135 min) kontinuierlich zugeführt. Nach beendetem Zulauf 2 wurde noch 60 min bei 85°C gerührt und unter Zusatz von 12 g Emulgatorlösung 3 nachstabilisiert sowie durch Zusatz wäßriger Calciumhydroxidpaste (97 g Calciumhydroxid in 85 g Wasser) der pH-Wert auf 8,0 erhöht. Der Feststoffgehalt der resultierenden wäßrigen Polymerisatdispersion betrug 48,1 Gew.-%.
Zulauf 1:

| | |
|---|---|
| 1170 g | n-Butylacrylat |
| 105 g | Acrylnitril |
| 225 g | Methacrylsäure |
| 0,5 g | Natriumvinylsulfonat |
| 15 g | Emulgatorlösung 3 |
| 510 g | entsalztes Wasser |

Zulauf 2:

| | |
|---|---|
| 12 g | Natriumperoxidisulfat |
| 375 g | entsalztes Wasser |

Der Restmonomerengehalt der wäßrigen Polymerisatdispersion umfaßte:

| | |
|---|---|
| 260 mg | Acrylnitril /kg Dispersion und |
| 3800 mg | n-Butylacrylat/kg Dispersion. |

Nachpolymerisation (Inertgasatmosphäre)
Jeweils 450 g der bei der Hauptemulsionspolymerisation erhaltenen wäßrigen Polymerisatdispersion wurden mit 0,1 Gew.-% t-BHP bzw. NaPS versetzt (bei 25°C). Anschließend wurden bei 25°C 21,6 g einer 1 gew.-%igen wäßrigen AIMS Lösung zugegeben und das Gemisch jeweils 24 h bei 25°C gehalten und danach der Restmonomerengehalt ermittelt. Er betrug << 1 Gew.-% bezogen auf dispergiertes Polymerisat und umfaßte:

| | |
|---|---|
| 17 mg | Acrylnitril /kg Dispersion |
| 280 mg | n-Butylacrylat/kg Dispersion (t-BHP als Oxidationsmittel) |

bzw.

| | |
|---|---|
| 60 mg | Acrylnitril /kg Dispersion |
| 770 mg | n-Butylacrylat/kg Dispersion (NaPS als Oxidationsmittel) |

F) Hauptemulsionspolymerisation (Inertgasatmosphäre)
Ein Gemisch aus 3,5 kg Vinylacetat, 2,5 kg Emulgatorlösung 2, 0,25 kg Natriumvinylsulfonat, 1 g FeSO₄·7H₂O und 19 kg entsalztes Wasser wurde auf 60°C erhitzt. Anschließend wurde unter Aufrechterhaltung von 30°C eine Lösung von 0,15 kg Natriumperoxodisulfat in 5,8 kg Wasser innerhalb von 3 h kontinuierlich zudosiert. Bei Polymerisationsbeginn wurde da) mit begonnen, zusätzlich eine Monomerenemulsion innerhalb von 2 h kontinuierlich zuzuführen. Nach beendeter Initiatorzufuhr wurde das Gemisch noch 1 h bei 60°C gehalten und mit 0,7 kg wäßriger Emulgatorlösung 1 nachstabilisiert, auf Raumtemperatur abgekühlt und über ein 120 µm-Filter filtriert. Der Feststoffgehalt der resultierenden wäßrigen Polymerisatdispersion betrug 49,2 Gew.-%, der pH-Wert des Dispergiermediums lag bei 4,7.
Zusammensetzung der Monomerenemulsion:

| | |
|---|---|
| 37,5 kg | Vinylacetat |
| 7,5 kg | n-Butylacrylat |
| 3,2 kg | 48 gew.-%ige wäßrige N-Methylolacrylamidlösung |
| 1,1 kg | wäßrige Emulgatorlösung 1 |
| 1,9 kg | wäßrige Emulgatorlösung 2 |
| 17,9 kg | entsalztes Wasser |

Der Restmonomerengehalt der wäßrigen Polymerisatdispersion umfaßte 2.800 mg Vinylacetat/kg Dispersion.
Nachpolymerisation (Inertgasatmosphäre)
Der pH-Wert von 600 g der bei der Hauptemulsionspolymerisation erhaltenen wäßrigen Polymerisatdispersion wurde mittels konzentriertem Ammoniak auf 7,1 eingestellt. Anschließend wurden bei 25°C 0,2 Gew.-% (bezogen auf dispergiertes Polymerisat) t-BHP in Form einer 2 gew.-%igen wäßrigen Lösung auf einmal zugesetzt. Dann wurden 35 g einer 2 gew.-%igen wäßrigen AIMS-Lösung bei 25°C innerhalb von 30 min kontinuierlich zugeführt. Anschließend wurde die wäßrige Polymerisatdispersion noch 6 Tage bei 25°C sich selbst überlassen.
Der danach ermittelte Restmonomerengehalt an Vinylacetat betrug lediglich noch 30 mg Vinylacetat/kg Dispersion. Der Gesamtrestmonomerengehalt lag weit unterhalb von 1 Gew.-% , bezogen auf dispergiertes Polymerisat.
G) Hauptemulsionspolymerisation (Inertgasatmosphäre)
45 g einer Monomerenemulsion wurden in 615 g Wasser eingerührt und das Gemisch auf 60°C erhitzt. Anschließend wurden jeweils 5 Gew.-% einer Oxidationsmittellösung von 4 g Natriumperoxodisulfat in 100 g Wasser und einer Reduktionsmittellösung von 2,7 g Rongalit in 100 g Wasser bei 50°C zugegeben und das Gemisch 15 min bei dieser Temperatur gerührt. Danach wurden zeitgleich beginnend der Rest der Monomerenemulsion (innerhalb von 120 min), der Rest der Oxidationsmittellösung und der Rest der Reduktionsmittellösung (jeweils innerhalb von 135 min) bei einer Temperatur von 60°C kontinuierlich zudosiert und anschließend das Reaktionsgemisch noch 60 min bei 60°C gehalten. Es wurde eine wäßrige Polymerisatdispersion erhalten, deren Feststoffgehalt 43,9 Gew.-% betrug und die einen pH-Wert von 2,3 aufwies. Zusammensetzung der Monomerenemulsion:

| | |
|---|---|
| 1200 g | n-Butylacrylat |
| 135 g | Acrylnitril |
| 13,5 g | Acrylsäure |
| 90 g | einer 30 gew.-%igen wäßrigen Lösung des Natriumsalzes von sulfatiertem Laurylalkoholethoxylat (EO-Grad: 30) = Emulgatorlösung 4 |
| 68 g | einer 20 gew.-%igen wäßrigen Lösung an ethoxy- |
| | liertem Talgfettalkohol (EO-Grad: 30) |
| 770 g | entsalztes Wasser |

Der Restmonomerengehalt der wäßrigen Polymerisatdispersion umfaßte:

| | |
|---|---|
| 13000 mg | n-Butylacrylat/kg Dispersion |
| 2700 mg | Acrylnitril /kg Dispersion |

Ferner enthielt die wäßrige Polymerisatdispersion 71 mg/kg Dispersion an Formaldehyd.
Nachpolymerisation (Inertgasatmosphäre)
300 g der bei der Hauptemulsionspolymerisation erhaltenen wäßrigen Polymerisatdispersion wurden in Anwendung eines Rückflußkühlers auf 70°C erhitzt. Anschließend wurden 0,4 Gew.-% NaPS (als 5 gew.-%ige wäßrige Lösung), bezogen auf dispergiertes Polymerisat, auf einmal zugegeben. Sodann wurde innerhalb von 10 min eine 1 gew.-%ige wäßrige Lösung an AIMS (insgesamt 0,2 Gew.-% AIMS, bezogen auf dispergiertes Polymerisat) zudosiert und anschließend das Gemisch noch 3 h bei 70°C gerührt. Danach waren in der wäßrigen Dispersion noch enthalten:

| | |
|---|---|
| 2000 mg | n-Butylacrylat/kg Dispersion |
| 6 mg | Acrylnitril /kg Dispersion |
| 8 mg | Formaldehyd /kg Dispersion. |

Der Gesamtrestmonomerengehalt lag unter 1 Gew.-% auf dispergiertes Polymerisat bezogen.
H) Beispiel G wurde wiederholt, die Zusammensetzung der Monomerenemulsion lautete jedoch:

| | |
|---|---|
| 1000 g | Ethylacrylat |
| 335 g | Vinylacetat |
| 13,5 g | Acrylsäure |
| 90 g | wäßrige Emulgatorlösung 4 |
| 68 g | wäßrige Emulgatorlösung 5 |
| 770 g | entsalztes Wasser |

Es wurde eine wäßrige Polymerisatdispersion erhalten, deren Feststoffgehalt 43,6 Gew.-% betrug und die einen pH-Wert von 2,2 aufwies.
Der Restmonomerengehalt der wäßrigen Polymerisatdispersion umfaßt:

| | |
|---|---|
| 7300 mg | Vinylacetat /kg Dispersion |
| 180 mg | Ethylacrylat /kg Dispersion |

Außerdem enthielt die wäßrige Polymerisatdispersion 86 mg Formaldehyd/kg Dispersion.
Nachpolymerisation (Inertgasatmosphäre)
300 g der bei der Hauptemulsionspolymerisation erhaltenen wäßrigen Polymerisatdispersion wurden in Anwendung eines Rückflußkühlers auf 70°C erhitzt. Anschließend wurden 0,4 Gew.% NaPS (als 5 gew.-%ige wäßrige Lösung), bezogen auf dispergiertes Polymerisat, auf einmal zugegeben. Sodann wurde innerhalb von 10 min eine 1 gew.-%ige wäßrige Lösung an AIMS (insgesamt 0,2 Gew.-% AIMS, bezogen auf dispergiertes Polymerisat) zudosiert und anschließend das Gemisch noch 3 h bei 70°C gerührt. Danach lag der Gesamtrestmonomerengehalt unter 1 Gew.-% auf dispergiertes Polymerisat bezogen und umfaßte:

| | |
|---|---|
| 30 mg | Vinylacetat /kg Dispersion |
| <10 mg | Ethylacrylat /kg Dispersion |
| 8 mg | Formaldehyd /kg Dispersion. |

## Patentansprüche

1. Verfahren zur Herstellung einer wäßrigen Polymerisatdispersion, bei dem man eine wäßrige Dispersion eines Polymerisats, das wenigstens ein wenigstens eine ethylenisch ungesättigte Gruppe aufweisendes Monomeres in chemisch gebundener Form eingebaut enthält, in an sich bekannter Weise so erzeugt, daß der Gesamtgehalt der wäßrigen Polymerisatdispersion an freien, d.h. nicht chemisch gebundenen, wenigstens eine ethylenisch ungesättigte Doppelbindung aufweisenden Monomeren, bezogen auf den Polymerisatgehalt der wäßrigen Polymerisatdispersion, im Bereich von > 0 bis ≤ 1 Gew.-% liegt und anschließend diesen Restmonomerengehalt durch Einwirkung eines wenigstens ein Oxidationsmittel und wenigstens ein Reduktionsmittel umfassenden radikalischen Redoxinitiatorsystems verringert, das dadurch gekennzeichnet ist, daß das Redoxinitiatorsystem als Reduktionsmittel Aminoiminomethansulfinsäure und/oder deren Salz umfaßt.

2. Verfahren nach Anspruch 1, dadurch gekennzeichnet, daß der zu verringernde Restmonomerengehalt > 0 bis ≤ 0,5 Gew.-% beträgt.

3. Verfahren nach Anspruch 1 oder 2, dadurch gekennzeichnet, daß der zu verringernde Restmonomerengehalt > 0 bis ≤ 0,1 Gew.-% beträgt.

4. Verfahren nach Anspruch 1 bis 3, dadurch gekennzeichnet, daß das dispergierte Polymerisat wenigstens zwei voneinander verschiedene, wenigstens eine ethylenisch ungesättigte Gruppe aufweisende Monomere in chemisch gebundener Form eingebaut enthält.

5. Verfahren nach Anspruch 4, dadurch gekennzeichnet, daß das dispergierte Polymerisat einerseits wenigstens zwei voneinander verschiedene, wenigstens eine ethylenisch ungesättigte Gruppe aufweisende Monomere in chemisch gebundener Form eingebaut enthält, und andererseits das Verhältnis L_{A}/L_{B} einen Wert ≥ 1,1 aufweist, wobei LA die bei 25°C und 1 bar zu ermittelnde molale Löslichkeit desjenigen Monomeren des zu verringernden Restmonomerengemisches mit der unter diesen Bedingungen höchsten molalen Löslichkeit in Wasser und L_{B} die entsprechende Löslichkeit desjenigen Monomeren des zu verringernden Restmonomerengemisches mit der unter diesen Bedingungen geringsten molalen Löslichkeit in Wasser meint.

6. Verfahren nach Anspruch 5, dadurch gekennzeichnet, daß L_{A}/L_{B} ≥ 1,5 beträgt.

7. Verfahren nach Anspruch 1 bis 6, dadurch gekennzeichnet, daß das zu verringernde Restmonomerengemisch wenigstens eines der Monomeren aus der Gruppe umfassend Styrol, Butadien, n-Butylacrylat und 2-Ethylhexylacrylat und wenigstens eines der Monomeren aus der Gruppe umfassend Acrylsäure, Methacrylsäure, Acrylamid und Methacrylamid beinhaltet.

8. Verfahren nach Anspruch 1 bis 6, dadurch gekennzeichnet, daß das zu verringernde Restmonomerengemisch Acrylnitril umfaßt.

9. Verfahren nach Anspruch 1 bis 6, dadurch gekennzeichnet, daß das zu verringernde Restmonomerengemisch Vinylacetat und/oder Vinylpropionat umfaßt.

10. Verfahren nach Anspruch 1 bis 6, dadurch gekennzeichnet, daß das zu verringernde Restmonomerengemisch Acrylsäure umfaßt.

11. Verfahren nach Anspruch 1 bis 10, dadurch gekennzeichnet, daß der Feststoffvolumengehalt der in an sich bekannter Weise erzeugten wäßrigen Polymerisatdispersion 30 bis 70 Vol.-% beträgt.

12. Verfahren nach Anspruch 1 bis 11, dadurch gekennzeichnet, daß zur Herstellung der in an sich bekannter Weise erzeugten wäßrigen Polymerisatdispersion Substanzen mitverwendet werden, die Quellen für freien Formaldehyd bilden.

13. Verfahren nach Anspruch 1 bis 12, dadurch gekennzeichnet, daß die Einwirkung des Redoxinitiatorsystems bei einem pH-Wert des wäßrigen Dispergiermediums von 6 bis 10 erfolgt.

14. Verfahren nach Anspruch 1 bis 13, dadurch gekennzeichnet, daß die Einwirkung des Redoxinitiatorsystems bei einer Temperatur von 50 bis 80°C erfolgt.

15. Verfahren nach Anspruch 1 bis 14, dadurch gekennzeichnet, daß molekularer Sauerstoff Bestandteil des Redoxinitiatorsystems ist.

16. Verfahren nach Anspruch 1 bis 15, dadurch gekennzeichnet, daß die Einwirkung des Redoxinitiatorsystems bei einer Temperatur oberhalb der Mindestfilmbildetemperatur der resultierenden wäßrigen Polymerisatdispersion erfolgt.

17. Verfahren nach Anspruch 1 bis 15, dadurch gekennzeichnet, daß die Einwirkung des Redoxinitiatorsystems bei einer Temperatur oberhalb der statischen Glasübergangstemperatur des dispergierten Polymerisats erfolgt.

18. Verfahren nach den Ansprüchen 1 bis 17, dadurch gekennzeichnet, daß die in an sich bekannter Weise erzeugte wäßrige Polymerisatdispersion eine Sekundärdispersion ist.

19. Verfahren nach den Ansprüchen 1 bis 18, dadurch gekennzeichnet, daß die Herstellung des dispergierten Polymerisats der in an sich bekannter Weise erzeugten wäßrigen Polymerisatdispersion aus wenigstens eine ethylenisch ungesättigte Gruppe aufweisenden Monomeren nach der Methode der radikalischen wäßrigen Emulsionspolymerisation erfolgt.

20. Verfahren nach Anspruch 19, dadurch gekennzeichnet, daß die radikalische wäßrige Emulsionspolymerisation nach dem Zulaufverfahren durchgeführt wird.

21. Verfahren nach Anspruch 20, dadurch gekennzeichnet, daß 50 bis 100 Gew.-% der zu polymerisierenden Monomeren dem Polymerisationsgefäß ab Beginn der radikalischen wäßrigen Emulsionspolymerisation zugesetzt werden.

22. Verfahren nach Anspruch 19 bis 20, dadurch gekennzeichnet, daß wenigstens 50 Gew.-% der zu polymerisierenden Monomeren ohne Beisein von Aminoiminomethansulfinsäure polymerisiert werden.

23. Verfahren nach Anspruch 19 bis 22, dadurch gekennzeichnet, daß das zur Herstellung des dispergierten Polymerisats verwendete radikalische Initiatorsystem Peroxodischwefelsäure und/oder deren Alkalimetallsalze umfaßt.

24. Verfahren nach Anspruch 19 bis 23, dadurch gekennzeichnet, daß zur Herstellung des dispergierten Polymerisats als radikalisches Initiatorsystem ausschließlich Peroxodischwefelsäure und/oder deren Alkalimetallsalze und/oder Ammoniumsalz verwendet wird.

25. Verfahren nach Anspruch 19 bis 24, dadurch gekennzeichnet, daß zur Herstellung des dispergierten Polymerisats eine Polymerisationstemperatur von 70 bis 100°C angewendet wird.

26. Verfahren nach Anspruch 19 bis 25, dadurch gekennzeichnet, daß die zur Herstellung des dispergierten Polymerisats zu polymerisierende Monomerenzusammensetzung wenigstens zwei voneinander verschiedene wenigstens eine ethylenisch ungesättigte Gruppe aufweisende Monomere umfaßt und im übrigen
- 70 bis 99,9 Gew.-% Ester der Acryl- und/oder Methacrylsäure mit 1 bis 12 C-Atome aufweisenden Alkanolen und/oder Styrol,
oder
- 70 bis 99,9 Gew.-% Styrol und/oder Butadien,
oder
- 70 bis 99,9 Gew.-% Vinylchlorid und/oder Vinylidenchlorid,
oder
- 40 bis 99,9 Gew.-% Vinylacetat, Vinylpropionat und/oder Ethylen
enthält.

27. Verfahren nach Anspruch 1 bis 26, dadurch gekennzeichnet, daß als Oxidationsmittel des radikalischen Redoxinitiatorsystems ein Peroxid und/oder ein Hydroperoxid mitverwendet wird.

28. Verfahren nach Anspruch 1 bis 27, dadurch gekennzeichnet, daß als Oxidationsmittel tert.-Butylhydroperoxid mitverwendet wird.

29. verfahren nach Anspruch 1 bis 28, dadurch gekennzeichnet, daß das radikalische Redoxinitiatorsystem auch eine in wäßrigem Reaktionsmedium lösliche Metallverbindung umfaßt, deren metallische Komponente in mehreren Wertigkeitsstufen auftreten kann.

30. Verwendung eines radikalischen Redoxinitiatorsystems, das als Reduktionsmittel Aminoiminomethansulfinsäure und/oder deren Salze umfaßt, zur Verringerung des > 0 bis ≤ 1 Gew.-%, bezogen auf den Polymerisatgehalt der wäßrigen Polymerisatdispersion, betragenden Gehalts einer wäßrigen Polymerisatdispersion an nicht chemisch gebundenen, freien, wenigstens eine ethylenisch ungesättigte Doppelbindung aufweisenden Monomeren.

## Claims

1. A process for the preparation of an aqueous polymer emulsion, in which an aqueous emulsion of a polymer which contains at least one chemically bonded monomer having at least one ethylenically unsaturated group is produced in a manner known per se so that the total content of free monomers having at least one ethylenically unsaturated double bond, ie. monomers of this type which are not chemically bonded, in the aqueous polymer emulsion is from > 0 to ≤ 1% by weight, based on the polymer content of the aqueous polymer emulsion, and this residual monomer content is then reduced by the action of a free radical redox initiator system comprising at least one oxidizing agent and at least one reducing agent, wherein the redox initiator system comprises, as the reducing agent, aminoiminomethanesulfinic acid and/or a salt thereof.

2. A process as claimed in claim 1, wherein the residual monomer content to be reduced is from > 0 to ≤ 0.5% by weight.

3. A process as claimed in claim 1 or 2, wherein the residual monomer content to be reduced is from > 0 to ≤ 0.1% by weight.

4. A process as claimed in any of claims 1 to 3, wherein the dispersed polymer contains, incorporated in chemically bonded form, at least two monomers which differ from one another and have at least one ethylenically unsaturated group.

5. A process as claimed in claim 4, wherein, on the one hand, the dispersed polymer contains, incorporated in chemically bonded form, at least two monomers which differ from one another and have at least one ethylenically unsaturated group and, on the other hand, the ratio S_{A}/S_{B} is ≥ 1.1, where S_{A} is the molal solubility, determined at 25°C and 1 bar, of that monomer of the residual monomer mixture whose content is to be reduced which has the highest molal solubility in water under these conditions and S_{B} is the corresponding solubility of that monomer of the residual monomer mixture whose content is to be reduced which has the lowest molal solubility in water under these conditions.

6. A process as claimed in claim 5, wherein S_{A}/S_{B} is ≥ 1.5.

7. A process as claimed in any of claims 1 to 6, wherein the residual monomer mixture whose content is to be reduced contains at least one of the monomers selected from the group consisting of styrene, butadiene, n-butyl acrylate and 2-ethylhexyl acrylate and at least one of the monomers selected from the group consisting of acrylic acid, methacrylic acid, acrylamide and methacrylamide.

8. A process as claimed in any of claims 1 to 6, wherein the residual monomer mixture whose content is to be reduced comprises acrylonitrile.

9. A process as claimed in any of claims 1 to 6, wherein the residual monomer mixture whose content is to be reduced comprises vinyl acetate and/or vinyl propionate.

10. A process as claimed in any of claims 1 to 6, wherein the residual monomer mixture whose content is to be reduced comprises acrylic acid.

11. A process as claimed in any of claims 1 to 10, wherein the solids volume content of the aqueous polymer emulsion produced in a manner known per se is from 30 to 70% by volume.

12. A process as claimed in any of claims 1 to 11, wherein substances which are sources of free formaldehyde are concomitantly used for the preparation of the aqueous polymer emulsion produced in a manner known per se.

13. A process as claimed in any of claims 1 to 12, wherein the redox initiator system acts at a pH of the aqueous dispersing medium of from 6 to 10.

14. A process as claimed in any of claims 1 to 13, wherein the redox initiator system acts at from 50 to 80°C.

15. A process as claimed in any of claims 1 to 14, wherein molecular oxygen is a component of the redox initiator system.

16. A process as claimed in any of claims 1 to 15, wherein the redox initiator system acts at a temperature above the minimum film formation temperature of the resulting aqueous polymer emulsion.

17. A process as claimed in any of claims 1 to 15, wherein the redox initiator system acts at a temperature above the statistical glass transition temperature of the dispersed polymer.

18. A process as claimed in any of claims 1 to 17, wherein the aqueous polymer emulsion produced in a manner known per se is a secondary emulsion.

19. A process as claimed in any of claims 1 to 18, wherein the dispersed polymer of the aqueous polymer emulsion produced in a manner known per se is prepared from monomers having at least one ethylenically unsaturated group by the free radical aqueous emulsion polymerization method.

20. A process as claimed in claim 19, wherein the free radical aqueous emulsion polymerization is carried out by the feed method.

21. A process as claimed in claim 20, wherein from 50 to 100% by weight of the monomers to be polymerized are added to the polymerization vessel from the beginning of the free radical aqueous emulsion polymerization.

22. A process as claimed in claim 19 or 20, wherein at least 50% by weight of the monomers to be polymerized are polymerized in the absence of aminoiminomethanesulfinic acid.

23. A process as claimed in any of claims 19 to 22, wherein the free radical initiator system used for the preparation of the dispersed polymer comprises peroxodisulfuric acid and/or an alkali metal salt thereof.

24. A process as claimed in any of claims 19 to 23, wherein exclusively peroxodisulfuric acid and/or an alkali metal salt thereof and/or the ammonium salt is used as the free radical initiator system for the preparation of the dispersed polymer.

25. A process as claimed in any of claims 19 to 24, wherein a polymerization temperature of from 70 to 100°C is used for the preparation of the dispersed polymer.

26. A process as claimed in any of claims 19 to 25, wherein the monomer composition to be polymerized for the preparation of the dispersed polymer comprises at least two monomers which differ from one another and have at least one ethylenically unsaturated group and additionally contains
- from 70 to 99.9% by weight of esters of acrylic and/or methacrylic acid with alkanols of 1 to 12 carbon atoms and/or styrene,
or
- from 70 to 99.9% by weight of styrene and/or butadiene,
or
- from 70 to 99.9% by weight of vinyl chloride and/or vinylidene chloride,
or
- from 40 to 99.9% by weight of vinyl acetate, vinyl propionate and/or ethylene.

27. A process as claimed in any of claims 1 to 26, wherein a peroxide and/or a hydroperoxide is concomitantly used as the oxidizing agent of the free radical redox initiator system.

28. A process as claimed in any of claims 1 to 27, wherein tert-butyl hydroperoxide is concomitantly used as the oxidizing agent.

29. A process as claimed in any of claims 1 to 28, wherein the free radical redox initiator system also comprises a metal compound which is soluble in the aqueous reaction medium and whose metallic component may occur in a plurality of valency states.

30. Use of a free radical redox initiator system which comprises, as the reducing agent, aminoiminomethanesulfinic acid and/or a salt thereof, for reducing the content of free monomers, which are not chemically bonded and have at least one ethylenically unsaturated double bond, in an aqueous polymer emulsion, said content being from > 0 to ≤ 1% by weight, based on the polymer content of the aqueous polymer emulsion.

## Revendications

1. Procédé de préparation d'une dispersion aqueuse de polymères, dans lequel on prépare une dispersion aqueuse d'un polymère, contenant sous forme liée chimiquement au moins un monomère comportant au moins un groupement à insaturation éthylénique, de façon connue en soi, de sorte que la teneur totale de la dispersion aqueuse de polymères en monomères libres, c'est à dire non liés de façon chimique, comportant au moins une double liaison à insaturation éthylénique, par rapport à la teneur en polymère de la dispersion aqueuse de polymères, se trouve dans la gamme allant de > 0 à ≤ 1% en poids, et on réduit ensuite cette teneur en monomères résiduels par l'action d'un système d'amorçage rédox comprenant au moins un oxydant et d'au moins un réducteur, caractérisé en ce que le système d'amorçage rédox contient en tant que réducteur de l'acide aminoiminométhanesulfinique et/ou ses sels.

2. Procédé selon la revendication 1, caractérisé en ce que la teneur en monomères résiduels à réduire vaut > 0 à ≤ 0,5% en poids.

3. Procédé selon la revendication 1 ou 2, caractérisé en ce que la teneur en monomères résiduels à réduire vaut > 0 à ≤ 0,1 % en poids.

4. Procédé selon l'une quelconque des revendications 1 à 3, caractérisé en ce que le polymère dispersé contient sous forme liée chimiquement au moins deux monomères différents comportant au moins un groupement à insaturation éthylénique.

5. Procédé selon la revendication 4, caractérisé en ce que, d'une part, le polymère dispersé contient sous forme liée chimiquement au moins deux monomères différents comportant au moins un groupement à insaturation éthylénique, et d'autre part, le rapport L_{A}/L_{B} présente une valeur ≥ 1,1, où L_{A} représente la solubilité exprimée en termes de molalité à déterminer à 25°C et 1 bar du monomère du mélange de monomères résiduels à réduire ayant la solubilité exprimée en termes de molalité dans l'eau la plus élevée dans ces conditions et L_{B} représente la solubilité exprimée en termes de molalité correspondante du monomère du mélange de monomères résiduels à réduire ayant la solubilité exprimée en termes de molalité dans l'eau la plus faible dans ces conditions.

6. Procédé selon la revendication 5, caractérisé en ce que L_{A}/L_{B} est ≥ 1,5.

7. Procédé selon l'une quelconque des revendications 1 à 6, caractérisé en ce que le mélange de monomères résiduels à réduire contient au moins un des monomères choisi dans le groupe formé du styrène, du butadiène, de l'acrylate de n-butyle et de l'acrylate de 2-éthylhexyle, et au moins un des monomères choisi dans le groupe formé par l'acide acrylique, l'acide méthacrylique, l'acrylamide et le méthacrylamide.

8. Procédé selon l'une quelconque des revendications 1 à 6, caractérisé en ce que le mélange de monomères résiduels à réduire contient de l'acrylonitrile;

9. Procédé selon l'une quelconque des revendications 1 à 6, caractérisé en ce que le mélange de monomères résiduels à réduire contient de l'acétate de vinyle et/ou du propionate de vinyle.

10. Procédé selon l'une quelconque des revendications 1 à 6, caractérisé en ce que le mélange de monomères résiduels à réduire contient de l'acide acrylique.

11. Procédé selon l'une quelconque des revendications 1 à 10, caractérisé en ce que la teneur volumique en matières solides de la dispersion aqueuse de polymères produite de façon connue en soi vaut 30-70% en volume.

12. Procédé selon l'une quelconque des revendications 1 à 11, caractérisé en ce que l'on utilise en outre pour la préparation connue en soi de la dispersion aqueuse de polymères, des substances générant des sources de formaldéhyde libre.

13. Procédé selon l'une quelconque des revendications 1 à 12, caractérisé en ce que l'action du système d'amorçage rédox a lieu à un pH du milieu aqueux de dispersion de 6-10.

14. Procédé selon l'une quelconque des revendications 1 à 13, caractérisé en ce que l'action du système d'amorçage rédox a lieu à une température de 50-80°C.

15. Procédé selon l'une quelconque des revendications 1 à 14, caractérisé en ce que de l'oxygène moléculaire fait partie du système d'amorçage rédox.

16. Procédé selon l'une quelconque des revendications 1 à 15, caractérisé en ce que l'action du système d'amorçage rédox a lieu à une température supérieure à la température minimale de formation de film de la dispersion aqueuse de polymères résultante.

17. Procédé selon l'une quelconque des revendications 1 à 15, caractérisé en ce que l'action du système d'amorçage rédox a lieu à une température supérieure à la température de transition vitreuse statique du polymère dispersé.

18. Procédé selon l'une quelconque des revendications 1 à 17, caractérisé en ce que la dispersion aqueuse de polymères produite de façon connue en soi est une dispersion secondaire.

19. Procédé selon l'une quelconque des revendications 1 à 18, caractérisé en ce que la préparation du polymère dispersé de la dispersion aqueuse de polymères préparée de façon connue en soi à partir de monomères présentant au moins un groupement à insaturation éthylénique, est effectuée selon la méthode de polymérisation radicalaire en émulsion aqueuse.

20. Procédé selon la revendication 19, caractérisé en ce que la polymérisation radicalaire en émulsion aqueuse est effectuée après le procédé d'introduction.

21. Procédé selon la revendication 20, caractérisé en ce que 50 à 100% en poids des monomères à polymériser peuvent être introduits dans le récipient de polymérisation à partir du début de la polymérisation radicalaire en émulsion aqueuse.

22. Procédé selon la revendication 19 ou 20, caractérisé en ce qu'au moins 50% en poids des monomères à polymériser peuvent être polymérisés sans la présence conjointe d'acide aminoiminométhanesulfinique.

23. Procédé selon l'une quelconque des revendications 19 à 22, caractérisé en ce que le système d'amorçage radicalaire utilisé pour la préparation du polymère dispersé comprend exclusivement l'acide peroxodisulfurique et/ou ses sels de métal alcalin.

24. Procédé selon l'une quelconque des revendications 19 à 23, caractérisé en ce que l'on utilise exclusivement l'acide peroxodisulfurique et/ou ses sels de métal alcalin et/ou son sel d'ammonium, comme système d'amorçage radicalaire pour la préparation du polymère dispersé.

25. Procédé selon l'une quelconque des revendications 19 à 24, caractérisé en ce que l'on emploie une température de polymérisation de 70-100°C pour la préparation du polymère dispersé.

26. Procédé selon l'une quelconque des revendications 19 à 25, caractérisé en ce que la composition de monomères à polymériser pour la préparation du polymère dispersé contient au moins deux monomères différents comportant au moins un groupement à insaturation éthylénique et en outre
- 70-99,9% en poids d'ester d'acide acrylique et/ou méthacrylique et d'alcanols à 1 à 12 atomes de carbone et/ou de styrène,
ou
- 70-99,9% en poids de styrène et/ou de butadiène,
ou
- 70-99,9% en poids de chlorure de vinyle et/ou de chlorure de vinylidène,
ou
- 40-99,9% en poids d'acétate de vinyle, de propionate de vinyle et/ou d'éthylène.

27. Procédé selon l'une quelconque des revendications 1 à 26, caractérisé en ce que l'on utilise comme oxydant du système d'amorçage radicalaire rédox, un peroxyde et/ou un hydroperoxyde.

28. Procédé selon l'une quelconque des revendications 1 à 27, caractérisé en ce que l'on utilise comme oxydant de l'hydroperoxyde de tert.-butyle.

29. Procédé selon l'une quelconque des revendications 1 à 28, caractérisé en ce que le système d'amorçage radicalaire rédox comprend également un composé métallique soluble dans le milieu réactionnel aqueux, dont le composant métallique peut se trouver dans plusieurs degrés d'oxydation.

30. Utilisation d'un système d'amorçage radicalaire rédox comprenant comme oxydant de l'acide aminoiminométhanesulfinique et/ou ses sels, pour la réduction de la teneur > 0 à ≤ 1% en poids, par rapport à la teneur en polymères de la dispersion aqueuse de polymères, d'une dispersion aqueuse de polymères en monomères libres, non liés chimiquement, comportant au moins une double liaison à insaturation éthylénique.
